(19) Europäisches Patentamt
European Patent Office
Office européen des brevets

(11) **EP 4 073 338 B1**

(12) **EUROPEAN PATENT SPECIFICATION**

(45) Date of publication and mention
of the grant of the patent:
**23.07.2025 Bulletin 2025/30**

(21) Application number: **20838795.1**

(22) Date of filing: **11.12.2020**

(51) International Patent Classification (IPC):
*E06B 9/303* (2006.01)   *E06B 9/32* (2006.01)
*G08C 17/02* (2006.01)   *H04M 1/72415* (2021.01)

(52) Cooperative Patent Classification (CPC):
**E06B 9/303; E06B 9/32; G08C 17/02;**
**H04L 12/2803; H04L 67/125; H04M 1/72415;**
E06B 2009/3222; Y04S 40/18

(86) International application number:
**PCT/US2020/064486**

(87) International publication number:
**WO 2021/119412 (17.06.2021 Gazette 2021/24)**

(54) **AUTOMATED MOTORIZED BLIND SYSTEM**

AUTOMATISIERTES MOTORISIERTES ROLLOSYSTEM

SYSTÈME DE STORE MOTORISÉ AUTOMATISÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2019 US 201962947872 P
21.02.2020 US 202062979860 P**

(43) Date of publication of application:
**19.10.2022 Bulletin 2022/42**

(73) Proprietor: **Lutron Technology Company LLC
Coopersburg, PA 18036-1299 (US)**

(72) Inventors:
• **BARNES, Bryan Robert**
**Coopersburg, PA 18036 (US)**
• **CASEY, Craig Alan**
**Coopersburg, PA 18036 (US)**
• **JAY, Brian A.**
**Coopersburg, PA 18036 (US)**
• **BARCO, Kyle T.**
**Coopersburg, PA 18036 (US)**
• **NACHTRIEB, Robert T.**
**Coopersburg, PA 18036 (US)**
• **WONG, Jennifer**
**Coopersburg, PA 18036 (US)**
• **DAS GUPTA, Roopshree**
**Coopersburg, PA 18036 (US)**

(74) Representative: **AWA Sweden AB
Box 5117
200 71 Malmö (SE)**

(56) References cited:
**JP-A- H 084 452    US-A1- 2019 119 978**

**EP 4 073 338 B1**

**Description**

**BACKGROUND**

A load control environment, such as a residence or an office building, for example, may be configured with various types of load control systems. For example, a lighting control system may be used to control the lighting loads in the user environment. A motorized window treatment control system may be used to control the natural light provided to the user environment. A heating, ventilation, and air-conditioning (HVAC) system may be used to control the temperature in the user environment.

Each load control system may include various control devices, including control-source devices and control-target devices. The control-target devices may receive messages (*e.g.*, digital messages) from one or more of the control-source devices. The messages may include load control messages for controlling an electrical load. The control-target devices may be capable of directly controlling the electrical load. The control-source devices may be capable of indirectly controlling the electrical load via the control-target device by sending messages to the control-target device that include control instructions for controlling the electrical load controlled by the control-target device.

Window treatments, such as, for example, roller shades, draperies, roman shades, and venetian blinds, are normally mounted in front of windows to provide for control of the amount of sunlight entering a space. A typical venetian blind system comprises a number of elongated slats extending along the width of the window and spaced apart vertically between a head rail and a bottom rail. The blind system typically comprises a lift cord that extends from the bottom rail through openings in the slats to the head rail and provides for lifting the bottom rail to raise and lower the slats. In a manual blind system, the end of the lift cord that is not attached to the bottom rail often hangs down from the head rail, such that a user may pull on the lift cord to raise and lower the slats. The blind system also typically comprises a tilt ladder that extends between the head rail and the bottom rail and operates to support and tilt the slats. Typical prior art manual blind systems include a rod that hangs from the head rail and may be rotated to adjust the tilt angle of the slats. The slats may be oriented substantially horizontal (i.e., perpendicular to the window) to allow sunlight to enter the space, and may be oriented substantially vertical (i.e., parallel to the window) to prevent sunlight from entering the space.

Some prior art venetian blind systems have included a motor to provide for lifting and tilting the slats. Such motorized venetian blind systems typically comprise a single motor coupled to a drive shaft that extends across the width of the head rail. The drive shaft may have at least two drums for winding up the lift cords when the shaft is rotated by the motor. The tilt ladders are typically coupled to the drive shaft through frictional force, such that when the slats have been fully tilted in one direction, the ends of the tilt ladder slip by the drive shaft as the drive shaft is rotated. To adjust the tilt of the slats, the drive shaft may be rotated in the reverse direction, such that the frictional force between the tilt ladder and the drive shaft causes the ends of the tilt ladder to rotate. Accordingly, the motor must be rotated in the reverse direction to adjust the tilt of the slats in typical prior art motorized venetian blind systems that comprise a single motor.

US 2019/0119978 A1 discloses a system for controlling motorized window coverings. The window coverings each have a processor, a network device and wireless transmitters enabling connection via a network. The network is controlled by one or more mobile devices which receive user input. The mobile devices wirelessly connect to a local area network (LAN) via a hub. One or more hubs are connected via the LAN. The window coverings are networked via a personal area network (PAN). The hubs convert the LAN protocol to the PAN protocol. Sensors send sensor data along with real time weather data to the processor. The processor uses this sensor data to update charts and schedules in memory, then sends commands to the controller based on these updated charts and schedules according to user defined and factory set parameters. The system includes both local and cloud based control. JPH084452A discloses to adjust a slat of a motor-driven Venetian blind to a tilt angle with which the max, limit viewing can be obtained in the state where the directly irradiated solar beam is shielded. A motor for tilting a slat and a driver for controlling the motor are installed on said motor-driven Venetian blind, and the solar beam incidence angle for the window surface at the time is calculated by a microcomputer.

SUMMARY

The invention is defined by the blind system according to claim 1 and dependent claims 2-15 define further developments thereof.

As described herein, a blind system may be configured to control (*e.g.*, automatically control) an amount of daylight entering a building to prevent direct sunlight from shining into the building, while attempting to maximize the amount of indirect sunlight shining into the building. The blind system may be mounted to cover a window located on a façade of the building. The blind system may comprise a headrail, a bottom bar, a plurality of slats spaced apart vertically between the headrail and the bottom bar, a lift cord extending from the headrail to the bottom bar to provide for raising and lowering the bottom bar, a tilt ladder extending from the headrail to the bottom bar and operable to support the slats and to tilt the slats, and a drive unit operably coupled to the tilt ladder for tilting the slats. The drive unit may be configured to selectively tilt the slats into each of a plurality of tilt positions that include at least: a view tilt position in which the slats are approximately horizontal, a slanted tilt position in which the slats are positioned to block direct sunlight from shining into the building, and a privacy tilt position in which the slats are approximately vertical. The drive unit may be configured to tilt the slats into one of the plurality of tilt positions at each of a plurality of event times according to a timeclock schedule. The plurality of event times may be determined from a predicted position of the sun, such that the drive unit is configured to tilt the slats to the slanted tilt position when the predicted position of the sun indicates that direct sunlight is incident on the façade, tilt the slats to the view tilt position when the predicted position of the sun indicates that no direct sunlight is incident on the façade, and tilt the slats to the privacy tilt position between sunset and sunrise.

In addition, a control device (e.g., a system controller) configured to control a blind system to control ( e.g., automatically control) an amount of daylight entering a building to prevent direct sunlight from shining into the building, while attempting to maximize the amount of indirect sunlight shining into the building. The control device may comprise a communication circuit configured to transmit message including commands for controlling the blind system, and a memory configured to store a timeclock schedule having event times and associated commands for tilting slats of the blind system into one of plurality of tilt positions that include at least: a view tilt position in which the slats are approximately horizontal, a slanted tilt position in which the slats are positioned to block direct sunlight from shining into the building, and a privacy tilt position in which the slats are approximately vertical. The control device may further comprise a control circuit configured to generate the timeclock schedule by determining the plurality of event times from a predicted position of the sun, and, based on the timeclock schedule, transmit, via the communication circuit, messages for controlling the blind system to tilt the slats to the slanted tilt position when the predicted position of the sun indicates that direct sunlight is incident on the façade, tilt the slats to the view tilt position when the predicted position of the sun indicates that no direct sunlight is incident on the façade, and tilt the slats to the privacy tilt position between sunset and sunrise.

Further, a method of configuring a blind system mounted on a façade of a building is also described herein. The method may comprise: (1) determining a compass direction of the façade using an electronic compass of a mobile device, the mobile device being positioned to face towards an interior surface of the façade; (2) displaying a top view image of the building on a visual display of the building; (3) displaying an indication of the compass direction determined from the electronic compass of the mobile device on the top view image of the building; (4) receiving an indication of an actual direction of the façade in response to a user input at the mobile device; (5) determining a compensation factor between the compass direction determined from the electronic compass and the actual direction determined from the user input; and (6) transmitting the actual direction of the façade to a control device for configuration of the blind system based on the actual direction of the façade.

## BRIEF DESCRIPTION OF THE DRAWINGS

FIG. 1 is a system diagram that illustrates an example load control environment for controlling electrical loads.

FIG. 2 is a perspective view of an example motorized window treatment, such as a Venetian blind system.

FIGs. 3A-3C are sides views of the blind system of FIG. 2 showing slats of the blind system in different tilt positions.

FIG. 4A is a perspective view of an example building illustrating a solar altitude angle and a solar azimuth angle in relation to an elevation angle of a façade of the building.

FIG. 4B is an example timeclock schedule for controlling motorized blinds installed in a building.

FIGs. 5A-5F are screenshots of a configuration application running on a mobile device that may be used to configure a motorized blind.

FIG. 6 is a flowchart of an example configuration procedure for configuring a motorized blind (e.g., using a mobile device running the configuration application that displays the screenshots shown in FIGs. 5A-5F).

FIG. 7 is a flowchart of an example orientation configuration procedure that may be executed to configure an orientation of a motorized blind.

FIG. 8 is a flowchart of another example orientation configuration procedure that may be executed to configure an orientation of a motorized blind.

FIG. 9 is a flowchart of an example timeclock schedule configuration procedure that may be executed to configure a timeclock schedule for controlling (*e.g.*, automatically controlling) tilt positions of one or more motorized blinds.

FIG. 10 is a flowchart of an example façade timeclock schedule configuration procedure that may be executed to configure a timeclock schedule for controlling tilt positions of one or more motorized blinds on a particular façade of the building in which the motorized blinds are located.

FIG. 11 is a flowchart of another example façade timeclock schedule configuration procedure.

FIG. 12 is a flowchart of an example timeclock event configuration procedure that may be executed to configure timeclock events of a timeclock schedule for controlling tilt positions of one or more motorized blinds.

FIG. 13 is a flowchart of an example façade timeclock schedule configuration procedure that may be executed to configure a timeclock schedule for controlling tilt positions of one or more motorized blinds on a particular façade of the building in which the motorized blinds are located.

FIG. 14 is a flowchart of an example timeclock schedule execution for a control device including a control-source device.

FIG. 15 is a block diagram of an example network device.

FIG. 16 is a block diagram of an example system controller.

FIG. 17 is a block diagram of an example control-target device.

FIG. 18 is a block diagram of an example control-source device.

FIG. 19 is a simplified block diagram of a motor drive unit.

## DETAILED DESCRIPTION

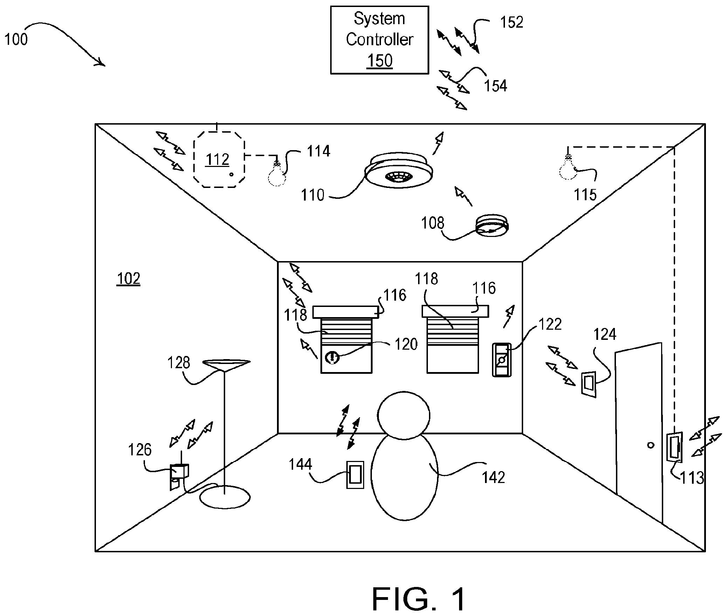

FIG. 1 depicts a load control system 100 that includes load control devices for controlling electrical loads. As shown in FIG. 1, the load control system 100 may be a load control environment, *e.g.*, a room 102 in a building. The load control system 100 may include control devices that may be capable of controlling (*e.g.*, directly controlling) an electrical load. The control devices may include control-source devices capable of communicating messages for controlling electrical loads and/or control-target devices capable of controlling electrical loads in response to instructions received in messages. The control-target devices may include load control devices capable of directly controlling the electrical loads in response to the instructions received in the messages from control-source devices.

Lighting control devices, such as the lighting control devices 112, 113, may be an example of control-target devices in the load control system 100. The lighting control device 112 may be a dimmer, an electronic switch, a ballast, a light emitting diode (LED) driver, and/or the like. The lighting control device 112 may be capable of directly controlling an amount of power provided to lighting load 114. The lighting control device 112 may be configured to wirelessly receive messages via the RF signals 154 *(e.g.,* from associated control devices) and to control the lighting load 114 in response to the received messages.

The lighting control device 113 may be a wall-mounted dimmer, a wall-mounted switch, or other keypad device for controlling a lighting load 115. The lighting control device 113 may be adapted to be mounted in a standard electrical wallbox. The lighting control device 113 may comprise a tabletop or plug-in load control device. The lighting control device 113 may comprise one or more buttons for controlling the lighting load 115. The lighting control device 113 may include a toggle actuator. Actuations (*e.g.*, successive actuations) of the toggle actuator may toggle (*e.g.,* turn off and on) the lighting load 115. The lighting control device 113 may include an intensity adjustment actuator (*e.g.,* a rocker switch or intensity adjustment buttons). Actuations of an upper portion or a lower portion of the intensity adjustment actuator may respectively increase or decrease the amount of power delivered to the lighting load 115 and thus increase or decrease the intensity of the receptive lighting load from a minimum intensity (*e.g.*, approximately 1%) to a maximum intensity (*e.g.*, approximately 100%). The lighting control device 113 may comprise a plurality of visual indicators, *e.g.*, light-emitting diodes (LEDs), which may be arranged in a linear array and are illuminated to provide feedback of the intensity of the lighting load 115. Examples of wall-mounted dimmers are described in greater detail in U.S. Patent No. 5,248,919, issued September 29, 1993, entitled LIGHTING CONTROL DEVICE, and U.S. Patent Application Publication No. 2014/0132475, published May 15, 2014, entitled WIRELESS LOAD CONTROL DEVICE, the entire disclosures of which are hereby incorporated by reference.

The lighting control device 113 may be configured to wirelessly receive messages via wireless signals, such as radio-frequency (RF) signals 154 *(e.g.,* from associated control devices) using a first wireless protocol, *e.g.,* a proprietary protocol, such as the CLEAR CONNECT protocol *(e.g.,* the CLEAR CONNECT A and/or CLEAR CONNECT X protocols). The lighting control device 113 may be configured to control the lighting load 115 in response to the received messages. Examples of dimmer switches operable to transmit and receive messages is described in greater detail in commonly-assigned U.S. Patent Application No. 12/033,223, filed February 19, 2008, entitled COMMUNICATION PROTOCOL FOR A RADIO-FREQUENCY LOAD CONTROL SYSTEM, the entire disclosure of which is hereby incorporated by reference.

The load control system 100 may comprise a daylight control device, such as a motorized window treatment 116. The motorized window treatment 116 may comprise a motor drive unit (not shown) configured to control a position of a covering material 118 to control an amount of daylight entering the load control environment 102. For example, the covering material 118 may comprise a shade fabric wrapped around a roller tube, and the motor drive unit may be configured to rotate the roller tube to raise and lower the shade fabric. In addition, the motorized window treatment 116 may comprise a Venetian blind and the covering material 118 may comprise one or more slats. The motor drive unit of the Venetian blind may be configured to raise and lower a bottom bar of the Venetian blind to raise and lower the slats, and/or to tilt the slats to adjust the amount of daylight entering the load control environment 102.

The load control system 100 may include one or more other control-target devices, such as a plug-in load control device 126 for directly controlling a floor lamp 128 a desk lamp, and/or other electrical loads that may be plugged into the plug-in load control device 126, and/or a temperature control device 124 *(e.g.,* thermostat) for directly controlling an heating, ventilation, and air-conditioning (HVAC) system. The load control system 100 may also, or alternatively, include an audio control device *(e.g.,* a speaker system) and/or a video control device *(e.g.,* a device capable of streaming video content).

The control-source devices in the load control system 100 may include a remote control device 122, an occupancy sensor 110, a daylight sensor 108, and/or a window sensor 120. The control-source devices may transmit messages to associated control-target devices for indirectly controlling an electrical load by transmitting messages, such as load control messages, to the control-target devices. The remote control device 122 may send messages for controlling control-target devices after actuation of one or more buttons on the remote control device 122. One or more buttons may correspond to a preset *(e.g.,* a scene) for controlling the lighting load 114, the lighting load 115, the lighting load 128, or any combination thereof. The occupancy sensor 110 may send messages to control-target devices in response to an occupancy or vacancy condition *(e.g.,* movement or lack of movement) that is sensed within its observable area. The daylight sensor 108 may send messages to control-target devices in response to the detection of an amount of light within its observable area. The window sensor 120 may send messages to control-target devices in response to a detected level of light received from outside of the load control system 100. For example, the window sensor 120 may detect when sunlight is directly shining into the window sensor 120, is reflected onto the window sensor 120, and/or is blocked by external means, such as clouds or a building. The window sensor 120 may send messages indicating the detected light level and/or a condition indicating that the detected light level crossed a threshold *(e.g.,* exceeded the threshold or fell below the threshold).

The control-source devices and/or the control-target devices may be in communication with a system controller 150. The system controller 150 may be capable of transmitting messages to, and/or receiving messages from, control devices *(e.g.,* control-source devices and/or control-target devices). The messages may include association information for associating control-source devices and control-target devices. The system controller 150 may facilitate communication of control information from control-source devices to associated control-target devices using the association information. For example, the system controller 150 may communicate with one or more control devices *(e.g.,* control-source devices and/or control-target devices) using the radio frequency (RF) signals 154. When the system controller 150 receives a message from a control device, the system controller may facilitate the communication of control instructions and/or other information to associated devices using the association information. The system controller 150 may also receive programming data *(e.g.,* settings) for control devices and transmit messages for performing control according to the programming data. In addition, the system controller 150 may be configured to messages for controlling the control-target devices in response to a timeclock schedule. The system controller 150 may be configured to execute a timeclock *(e.g.,* an astronomical timeclock) for determining a present time in order to determine when to transmit messages for controlling the control-target devices according to event times of the timeclock schedule.

The system controller 150 may also, or alternatively, communicate via wireless signals, such as RF signals 152, using a second wireless protocol *(e.g.,* a standard protocol, such as WI-FI, BLUETOOTH, *etc.).* For example, the system controller 150 may communicate with one or more network devices, such as a network device 144 *(e.g.,* a mobile device). The network device 144 may include a personal computer (PC), a laptop, a tablet, a smart phone, or equivalent device via the RF signals 152. The system controller 150 may be a gateway device, a network bridge device, an access point, and/or the like. Examples of load control systems having system controllers 150 are described in greater detail in commonly-assigned U.S. Patent Application Publication No. 2014/0001977, published January 2, 2014, entitled LOAD CONTROL SYSTEM HAVING INDEPENDENTLY-CONTROLLED UNITS RESPONSIVE TO A BROADCAST CONTROLLER, and U.S. Patent Application Publication No. 2015/0185752, published July 2, 2015, entitled WIRELESS LOAD CONTROL SYSTEM, the entire disclosures of which are hereby incorporated by reference.

The control-source devices in load control system 100 may be associated with the control-target devices using various association techniques. For example, in an association procedure, the control-source devices may be associated with the control-target devices by the user 142 actuating a button on the control-source device and/or the control-target device. The actuation of the button on the control-source device and/or the control-target device may place the control-source device and/or the control-target device in an association mode, for example, for being associated with one another. In the association mode, the control-source device may transmit an association message to the control-target device. The association message from a control-source device may include a unique identifier of the control-source device. The control-target device may locally store the unique identifier of the control-source, such that the control-target device may be capable of recognizing messages (*e.g.*, subsequent messages) from the control-source device that may include load control instructions. The control-target device may be capable of responding to the messages from the associated control-source device by controlling a corresponding electrical load according to the load control instructions received in the messages. Examples of load control systems are described in greater detail in commonly-assigned U.S. Patent No. 5,905,442, issued May 18, 1999, entitled METHOD AND APPARATUS FOR CONTROLLING AND DETERMINING THE STATUS OF ELECTRICAL DEVICES FROM REMOTE LOCATIONS, and U.S. Patent No. 8,417,388, issued April 9, 2013, entitled LOAD CONTROL SYSTEM HAVING AN ENERGY SAVINGS MODE, the entire disclosures of which are hereby incorporated by reference.

The load control system 100 may be designed and/or configured using a design software, *e.g.*, a graphical user interface (GUI) software and/or a configuration application, running on the network device 144 *(e.g.,* such as a personal computer (PC), a laptop, a tablet, a smart phone, or equivalent device having a visual display). Using the design software, a user 142 may select the control devices *(e.g.,* the control devices of the load control system, such as control-source devices and/or control target devices) and/or adjust programming data for configuring the system. For example, the user 142 may be a homeowner, who may be using the network device 144 to design and/or configure the load control system 100 in a house in which the homeowner lives. In addition, the user 142 may be a worker, such as an electrical contractor, who may be hired by the homeowner to design and/or configured the load control system 100 in a house in which the homeowner lives. The design software running on the network device 144 may be used to configure the motorized window treatments 116 *(e.g.,* as will be described in greater detail below). Examples of configuration procedures for load control systems are described in greater detail in commonly-assigned U.S. Patent No. 8,228,163, issued July 24, 2012, entitled HANDHELD PROGRAMMER FOR LIGHTING CONTROL SYSTEM, and U.S. Patent Application Publication No. 2014/0265568, published September 18, 2014, entitled COMMISSIONING LOAD CONTROL SYSTEMS, the entire disclosures of which are hereby incorporated by reference.

The functionality of the load control system 100 may be automatically configured by the design software in response to types of control devices (*e.g.*, lighting control devices, remote control devices, *etc.)* that are added to the load control system during the configuration procedure. The design software may automatically generate the programming data *(e.g.*, including one or more control features) that defines the operation of the load control system 100 based on the location and/or load type of the control devices that have been added to the load control system. After the control devices have been added to the load control system 100, the design software may be configured to review with the user of the design software the details of the control features that were automatically programmed. The user may confirm that the automatically programmed functionality is desired and/or manually edit the control features. Once functionality of the control features is confirmed and/or edited, portions of the programming database may be transmitted to the control devices of the load control system 100 for use during normal operation of the load control system. For example, the full programming database may be transferred from the network device 144 to the system controller 150 and the system controller 150 may transmit the portions of the programming database to each of the control devices. As soon as the system controller 150 begins to transmit the portions of the programming database to the control devices, the user may be able to use the network device 144 to control the operation of the load control system 100. For example, since the entire programming database is stored on the system controller 150, the user may select a command using the network device 144 and the network device 144 may transmit a message including the command to the system controller 150, which may in turn transmit commands to the appropriate control devices of the load control system 100 *(e.g.,* based on the programming data base stored on the system controller. The programming data that is transferred to the control devices may be used when the control devices transmit commands directly to load control devices. As soon as a load control device has its portion of the database, the load control device may be controlled by the control devices (*e.g.*, remote control devices and other control devices in the system).

The design software executing at the system controller 150 may automatically update the programming data after the programming data has been transmitted to the control devices and the load control system 100 is fully functional (*e.g.*, during normal operation). When one or more control devices (e.g., lighting control devices and/or remote control devices) are added to the load control system 100, the design software executing at the system controller 150 may automatically update the control features associated with the added control devices and/or add control features. For example, if the user uses the design software to add a lighting control device to the load control system 100 via the network device 144, the design software executing at the system controller 150 may automatically add the lighting control device to various scenes and/or schedules. When automatically updating the control features after the programming data is transmitted to the control devices, the design software may not overwrite manual changes previously made by the user to the control features. This may ensure that a user's manual changes are maintained after subsequent automatic updates.

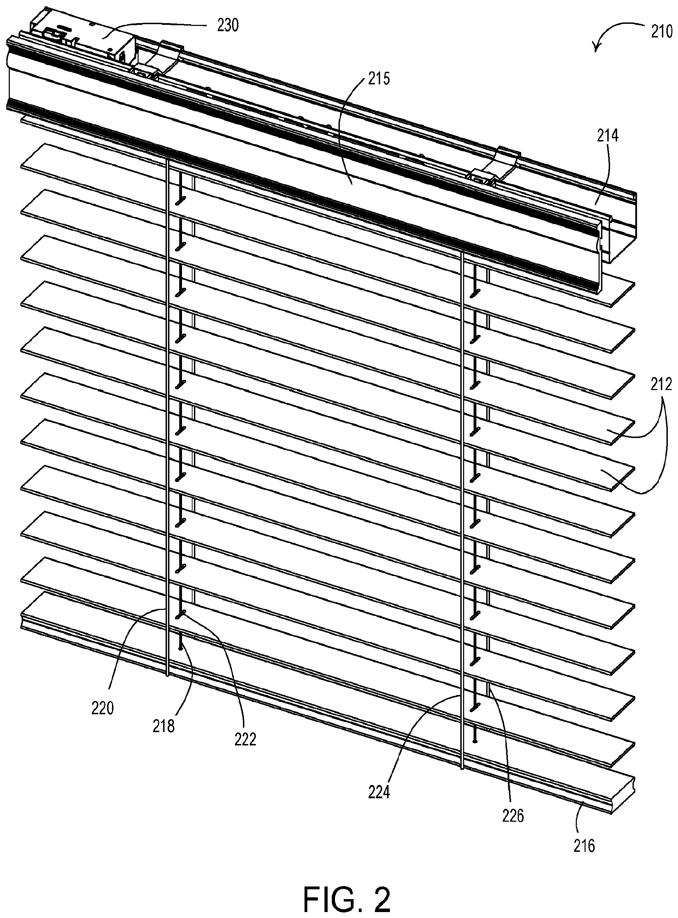

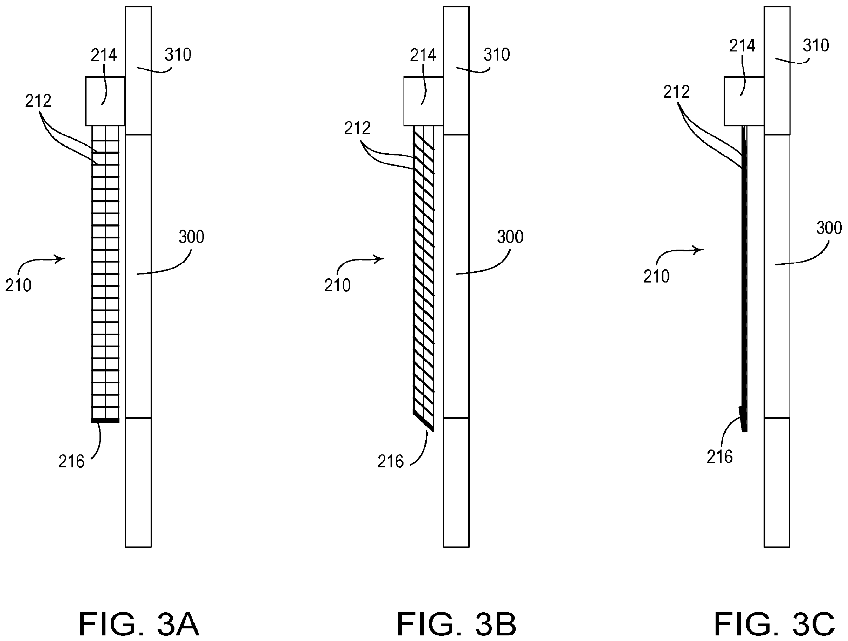

FIG. 2 is a perspective view of an example motorized window treatment, *e.g.*, a Venetian blind system 210, which may be deployed as the motorized window treatment 116 of the load control system 100. FIGs. 3A-3C are side view of blind system 210 of FIG. 2 shown mounted in front of a window 300 on a façade 310 of a building. The blind system 210 may include a covering material, *e.g.*, a plurality of flat slats 212, disposed between a headrail 214 and a bottom bar 216 *(e.g., a bottom rail)*. The blind system 210 may be configured to be mounted in front of the window 300. The blind system 210 may include mounting brackets (not shown) coupled to the top of the headrail 214 for mounting the blind system 210 to a ceiling above the window 300, and side panels (not shown) that may allow for alternatively mounting the blind system 210 to walls surrounding the window 300. The blind system 210 may also comprise a valance 215 located in front of the headrail 214.

The blind system 210 may also comprise a drive unit 230 *(e.g., a motor drive unit or blind drive unit)* located in the headrail 214 for adjusting the covering material of the blind system 210 to control the amount of daylight entering a space. For example, the drive unit 230 may comprise a motor (not shown) configured to be operated to raise and lower the bottom bar 216 and/or tilt the slats 212 to control the amount of daylight entering the space as will be described in greater detail below. In one embodiment, the drive unit 230 may be configured to independently control a position of the bottom bar 216 and a tilt angle of the slats 212, so as to control the amount of daylight entering the space in which the blind system 210 is installed. In other embodiments, the drive unit 230 may be configured to only control one or the other of the position of the bottom bar 216 or the tilt angle of the slats 212. For example, in various embodiments, the drive unit 230 may be configured to only control the tilt angle of the slats 212. In such embodiments, the position of the bottom bar 216 may be adjustable manually by a user. The drive unit 230 may be configured to receive a supply voltage, *e.g.*, a direct-current (DC) supply voltage from a DC power supply, such as, for example, a battery *(e.g.*, an alkaline battery, a nickel cadmium battery, a nickel metal hydride battery, a lithium ion battery, *etc.)*. The drive unit 230 may include a wireless communication circuit, *e.g.*, such as a radio-frequency (RF) receiver or transceiver, for receiving wireless signals *(e.g., RF signals)*. The drive unit 230 may be configured to raise and lower the bottom bar 116 and/or tilt the slats 212 to control the amount of daylight entering a space in response to a command received via the wireless signals. The blind system 210 may also comprise one or more batteries *(e.g.*, alkaline batteries, nickel cadmium batteries, nickel metal hydride batteries, lithium ion batteries, *etc.)* located inside or at least partly inside of the headrail 214 for powering the drive unit 230. The batteries may be, for example, D-cell or AA batteries.

The blind system 210 may comprise two lift cords 218 positioned at the left and right ends of the slats 112 to provide for lifting the bottom bar 216. The blind system 210 may further comprise two tilt ladders 220 positioned at the left and right ends of the slats 112 to provide for tilting the slats 212. The motor of the drive unit 230 may be operatively coupled to the tilt ladder for tilting the slats. The slats 212 may extend across the width of the window 300 that the blind system *210 (e.g.,* such that the blind system 210 may be capable of covering the window) and the slats 212 may be spaced apart equally between the headrail 214 and the bottom bar 216. Alternatively, the slats 212 may comprise curved slats rather than flat slats. The lift cords 218 may each extend from the headrail 214 to the bottom bar 216 through respective lift cord openings 222 in each of the slats 212. In embodiments that include motorized raising and lowering of the bottom bar 216, the drive unit 230 may be configured to wind and unwind the lift cords 218 to respectively raise and lower the bottom bar 116 between a fully-raised position and a fully-lowered position. In such embodiments, as the drive unit 230 raises the bottom bar 216, the slats 212 may each contact the bottom bar one-by-one and may be raised up with the bottom bar. In addition, the drive unit 230 may control the bottom bar 216 to a specific intermediate position between the fully-raised position and the fully-lowered position.

The tilt ladders 220 may each have a front band 224 *(e.g., a front ribbon)* and a rear band 226 *(e.g., a rear ribbon)* that extend parallel to each other from the headrail 214 to the bottom bar 216 adjacent to the lift cords 218. The front band 224 of the tilt ladders 220 may typically be positioned in front of the lift cords 218. Each tilt ladder 220 may also comprise a plurality of rungs (not shown) *(e.g.*, bands or ribbons) that extend from the front band 224 to the rear band 226 between each pair of adjacent slats 212 of the blind system 210 to thus form a ladder. Accordingly, each of the slats 212 may rest on one of the rungs in each of the tilt ladders 220, such that the slats may be equally spaced apart vertically when the bottom bar 216 is in the fully-lowered position. In embodiments in which the position of the bottom bar 216 is controlled by the drive unit 230, the front and rear bands 224, 226 may be coupled to the drive unit 230 in the headrail 214. As the drive unit 230 winds up the lift cord 218 to raise the bottom bar 216, the portions of the tilt ladders 220 between adjacent rungs may become slack as the raising bottom bar and accumulating slats 212 meet the next slat. The drive unit 230 may be configured to tilt the slats 212 by vertically moving the front and rear bands 224, 226 with respect to each other, such that the rungs, and thus the slats 212, are tilted at an angle with respect to the front and rear bands *(e.g.,* a tilt angle $\theta_{BLIND}$). Alternatively, the front and rear bands 224, 226 and the rungs of the tilt ladders 220 could comprise cords.

As shown in FIGs. 3A-3C, the drive unit 230 may tilt the slats 212 of the blind system 210 into different tilt positions.

For example, the drive unit 230 may be configured to tilt the slats 212 into a view tilt position as shown in FIG. 3A, a slanted tilt position *(e.g.,* a direct sunlight blocking position or "fade-fighter" tilt position) as shown in FIG. 3B, and/or a privacy tilt position as shown in FIG. 3C. The drive unit 230 may be configured to control the slats 212 to each be in a horizontal orientation *(e.g.,* in a horizontal plane) in the view tilt position to allow daylight *(e.g.,* indirect sunlight) to enter the space in which the blind system 210 and/or to allow an occupant of the space to have a view outside of the window. For example, the view tilt position may be considered a 50% tilt position of the blind system 210. The drive unit 230 may be configured to tilt the slats 212 approximately 45° towards the rear of the blind system 210 *(e.g.,* towards the window) into the slanted tilt position to block direct sunlight from shining into the space while still allowing indirect sunlight to enter the space, although it will be appreciated that the drive unit 230 may be configured to tilt *(e.g.,* continuously, variably, and reversibly tilt) the slats 212 to any angle between 0° and 90°, such as, for example, 30°, 45°, 60°, *etc.* The slanted tilt position may range from approximately a 1% tilt position to a 49% tilt position of the blind system 210 where, for example, a 45° tilt angle may be considered a 25% tilt position. For example, the slanted tilt position may be configured and/or adjusted using the design software running on a network device *(e.g.,* the network device 144). In addition, the drive unit 230 may be configured to tilt the slats 212 approximately 90° from the horizontal plane towards the rear of the blind system 210 into the privacy tilt position as shown in FIG. 3C to block direct and indirect sunlight from entering the space and/or to block view through the window to provide privacy for the occupant of the space. For example, the privacy tilt position may be considered a 0% tilt position of the blind system 210. Further, the drive unit 230 may be configured to tilt the slats approximately 90° from the horizontal plane towards the front of the blind system 210 when in the privacy tilt position *(e.g.,* a 100% tilt position of the blind system 210).

The drive unit 230 of the blind system 210 may be configured to control *(e.g.,* automatically control) the tilt position of the blind system 210 *(e.g.,* the slats 212). For example, when direct sunlight may be incident on the façade 310 in which the window 300 is located, the drive unit 230 of the blind system 210 may be configured to automatically control the tilt position of the slats 212 to the slanted tilt position to block direct sunlight from shining into the space. When direct sunlight may not be incident on the façade 310, the drive unit 230 of the blind system 210 may be configured to control (e.g., automatically control) the tilt position of the slats 212 to the view tilt position to allow indirect sunlight to enter the space and/or to allow the user of the space to have a view outside of the window. For example, the drive unit 230 may be configured to delay automatic adjustment of the tilt position for a predetermined amount of time *(e.g.,* one hour) after an adjustment of the tilt position in response to command received via the wireless signals. In addition, the drive unit 230 of the blind system 210 may be configured to control the tilt position of the slats 212 to the privacy tilt position at times relative to sunrise and sunset times for the upcoming day. For example, the drive unit 230 of the blind system 210 may be configured to control the tilt position of the slats 212 to the privacy tilt position between sunset and sunrise. Further, the drive unit 230 of the blind system 210 may be configured to control the tilt position of the slats 212 to the privacy tilt position at predetermined times of the day that may be specified by the user of the space *(e.g.,* during nighttime hours).

The drive unit 230 of the blind system 210 may be configured to control *(e.g.,* automatically control) the tilt position of the slats 212 according to a predetermined timeclock schedule. The timeclock schedule may be generated by a system controller of the load control system of the blind system 210 *(e.g.,* the system controller 150). The system controller may be configured to generate a timeclock schedule each day *(e.g.,* during the nighttime hours while the slats 212 are in the privacy tilt position). The system controller may be configured to store the timeclock schedule and transmit commands to the drive unit 230 of the blind system 210 for tilting the slats 212 to the appropriate tilt positions according to the timeclock schedule. In addition, the system controller may transmit the timeclock schedule to the drive unit 230 of the blind system 210 for use during the coming day. The drive unit 230 of the blind system 210 may be configured to store the timeclock schedule in memory *(e.g.,* a new timeclock schedule each day) and tilt the slats 212 to a plurality of tilt positions at respective event times of the timeclock schedule during the day *(e.g.,* the drive unit 230 may be configured to execute a timeclock). Further, the drive unit 230 of the blind system 210 may be configured to generate the timeclock schedule each day itself. Additionally and/or alternatively, the drive unit 230 of the blind system 210 may be configured to generate timeclock schedules for multiple upcoming days and store the timeclock schedules in the memory.

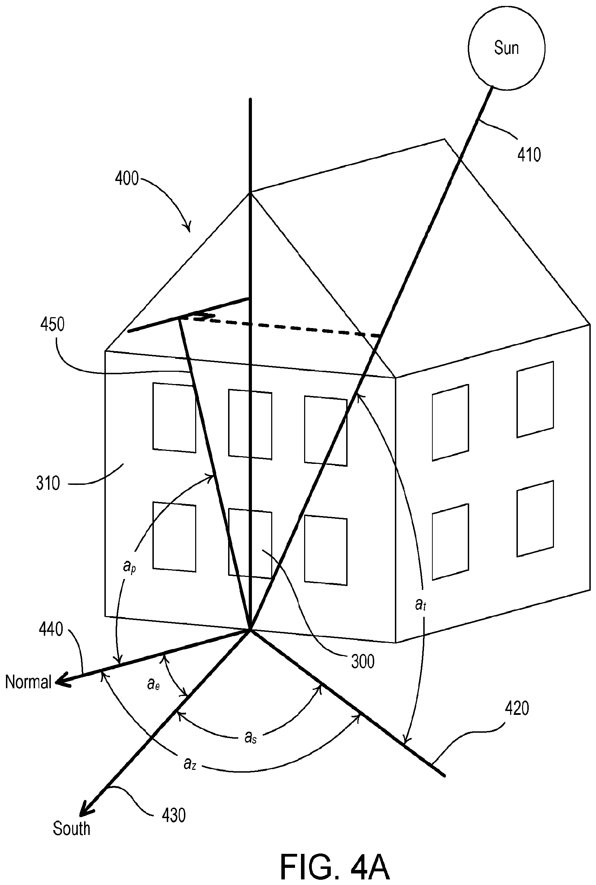

The system controller and/or the drive unit 230 of the blind system 210 may be configured to calculate a predicted position of the sun at a plurality of discrete times in a day in order to determine when and how to generate the timeclock events of the timeclock schedule for the day. The position of the sun in the sky may be defined by a solar altitude angle $a_t$ and a solar azimuth angle $a_s$. FIG. 4A is a perspective view of an example building 400 on which the window 300 of the façade 310 may be located. The solar altitude angle $a_t$ may be the angle between a line 410 directed towards the sun and a line 420 from the façade 310 to the sun projected on the ground *(e.g.,* a line directed towards the horizon at the position of the building 400). The solar altitude angle $a_t$ may also be thought of as the angle of incidence of the sun's rays on a horizontal surface. The solar azimuth angle $a_s$ may be the angle formed by a line 430 from the façade 310 to the south and the line 420 from the observer to the sun projected on the ground.

The system controller and/or the drive unit 230 of the blind system 210 may be configured to calculate the solar altitude angle $a_t$ and the solar azimuth angle $a_s$ as functions of the date *(e.g.,* a Julian date) and time *(e.g.,* the standard time $t_s$), as well as the position *(e.g.,* longitude $\lambda$ and latitude $\Phi$) of the building 400 in which the window 300 is located. For example, the system controller and/or the drive unit 230 of the blind system 210 may be configured to calculate the solar altitude angle $a_t$ and the solar azimuth angle $a_s$ using the following equations. The difference in a solar time $t_{solar}$ (e.g., a time as given by a sundial) and a standard time $t_s$ (e.g., a time as given by a clock) due to the obliquity of the Earth's axis of rotation may be defined by an equation of time ET. The equation of time ET can be determined as a function of the present Julian date J using, for example, the equation:

$$ET = 0.1644 \cdot \sin(A) - 0.1273 \cdot \cos(B), \qquad \text{(Equation 1)}$$

where $A = [4\pi \cdot (J - 81.6)] / 365.25$ and $B = [2\pi \cdot (J - 2.5)] / 365.25$. The Julian date J may be a decimal number representing the present day in the year. For example, the Julian date J may equal one for January 1, two for January 2, three for January 3, and so on. The solar time $t_{solar}$ may be calculated as a function of the standard time $t_s$, the equation of time ET, a standard meridian SM of the time zone of the location of the building, and the longitude $\lambda$, for example, using the equation:

$$t_{solar} = t_s + ET + [ 12 \cdot (SM - \lambda) ] / \pi. \qquad \text{(Equation 2)}$$

The standard meridian SM may be determined from the time zone of the location of the building 400. Each time zone may have a unique standard meridian, which may define a particular line of latitude within the time zone. There may be approximately 15° between the standard meridians of adjacent time zones.

The solar altitude angle $a_s$ and the solar azimuth angle $a_z$ may be determined from a solar declination $\delta$. The solar declination $\delta$ may define an angle of incidence of the rays of the sun on the equatorial plane of the Earth. The solar declination $\delta$ may be determined using, for example, the equation:

$$\delta = 0.4093 \cdot \sin [ 2\pi \cdot (J - 81) / 368 ]. \qquad \text{(Equation 3)}$$

The solar altitude angle $a_t$ at the standard time $t_s$ may be calculated as a function of the solar time $t_{solar}$, the solar declination $\delta$, and the local latitude $\Phi$ using, for example, the equation:

$$a_t = \arcsin [ \sin(\Phi) \cdot \sin(\delta) - \cos(\Phi) \cdot \cos(\delta) \cdot \cos(\pi \cdot t_{solar} / 12) ]. \qquad \text{(Equation 4)}$$

The solar azimuth angle $a_s$ at the standard time $t_s$ may be calculated as a function of the solar time $t_{solar}$, the solar declination $\delta$, and the local latitude $\Phi$ using, for example, the equation:

$$a_s = \arctan [ -\cos(\delta) \cdot \sin(\pi \cdot t_{solar} / 12) / C], \qquad \text{(Equation 5)}$$

where $C = -[ \cos(\Phi) \cdot \sin(\delta) + \sin(\Phi) \cdot \cos(\delta) \cdot \cos(\pi \cdot t_{solar} / 12) ]$.

The system controller and/or the drive unit 230 of the blind system 210 may be configured to determine if the sun is in a position such that sunlight is directly incident on the façade 310 by calculating a position metric of the sun. For example, the system controller and/or the drive unit 230 of the blind system 210 may be configured to determine if the sun is directly shining on the façade 310 by calculating a profile angle $a_p$ of the sun at the façade 310. The profile angle $a_p$ of the sun may be calculated using the solar altitude angle $a_t$ and the solar azimuth angle $a_s$ of the sun and an elevation angle $a_e$ (e.g., a façade angle) of the façade 310 on which the window 300 is located. The elevation angle $a_e$ may be the angle between a line 440 that is normal to the façade 310 and the line 430 that is directed south. The profile angle $a_p$ may define an apparent altitude of the sun relative to the façade 310. The profile angle $a_p$ may be the angle between a line 440 that is normal to the façade 310 and a line 450 that is the projection of the line 410 directed towards the sun onto a vertical plane through the line 440 that is normal to the façade 310. The profile angle $a_p$ may be calculated as a function of the solar altitude angle $a_t$ and a solar elevation azimuth angle $a_z$ using, for example, the equation:

$$a_p = \arctan [ \sin(a_t) / \cos(a_z) ], \qquad \text{(Equation 6)}$$

where the solar elevation azimuth angle $a_z$ is the difference between the solar azimuth angle $a_s$ and the elevation angle $a_e$ of the façade 310 (e.g., $a_z = a_s - a_e$). When the profile angle $a_p$ is between 0° and 90°, the sun may be in a position to shine on the façade 310 (e.g., on a sunny day). When the profile angle $a_p$ is less than 0°, the sun may be past the horizon (e.g., before sunrise and/or after sunset). When the profile angle $a_p$ is greater than 90°, the sun may have passed over the top of the building 400.

In addition, the system controller and/or the drive unit 230 of the blind system 210 may be configured to determine if the sun is directly shining on the façade 310 by calculating the solar azimuth angle $a_s$ of the sun. The solar azimuth angle $a_s$ may be calculated as a function of the solar time $t_{solar}$, the solar declination $\delta$, and the local latitude $\Phi$ using, for example, Equation 5 as shown above. The system controller and/or the drive unit 230 of the blind system 210 may be configured to determine solar azimuth angle limits $a_{s1}$, $a_{s2}$ for the façade 310 based on the elevation angle $a_e$ of the façade 310. When the solar azimuth angle $a_s$ is between solar azimuth angle limits $a_{s1}$, $a_{s2}$ for the façade 310, the sun may be in a position to shine on the façade 310 (e.g., on a sunny day).

The system controller and/or the drive unit 230 of the blind system 210 may be configured to calculate the position metric (e.g., the profile angle $a_p$ and/or the solar azimuth angle $a_s$) of the sun on the façade 310 to determine the times at which direct sunlight may begin being incident on the façade 310 and/or the times at which direct sunlight may cease being incident on the façade during the upcoming day. The system controller and/or the drive unit 230 of the blind system 210 may be configured to generate the timeclock events of the timeclock schedule to cause the blind system 210 to tilt to the slanted tilt position when the sun is directly shining on the façade 310, and to cause the blind system 210 to tilt to the view tilt position when the sun is not directly shining on the façade 310 during the upcoming day. For example, the system controller and/or the drive unit 230 of the blind system 210 may be configured to determine one or more fade-fighter tilt times $t_{FF}$ at which to control the blind system 210 to the slanted tilt position (e.g., the fade-fighter tilt position), and one or more view tilt times $t_{VIEW}$ at which to the control the blind system 210 to the view tilt position during the upcoming day. The system controller and/or the drive unit 230 of the blind system 210 may be configured to generate the timeclock events of the timeclock schedule to cause the blind system 210 to tilt to the privacy tilt position starting at or shortly after sunset and ending at sunrise. For example, the system controller and/or the drive unit 230 of the blind system 210 may be configured to determine a privacy tilt position time $t_{PRIV}$ at which to control the motorized blinds to the privacy tilt position based on a sunset time $t_{SUNSET}$ for the upcoming day. In addition, the system controller and/or the drive unit 230 of the blind system 210 may be configured to generate the timeclock events of the timeclock schedule to cause the blind system 210 to tilt to the privacy tilt position between predetermined times that may be preconfigured by a user of the blind system 210. For example, the user may override one or more preconfigured tilt positions of the blind system 210 (e.g., tilt positions that are based on the sunlight measurements).

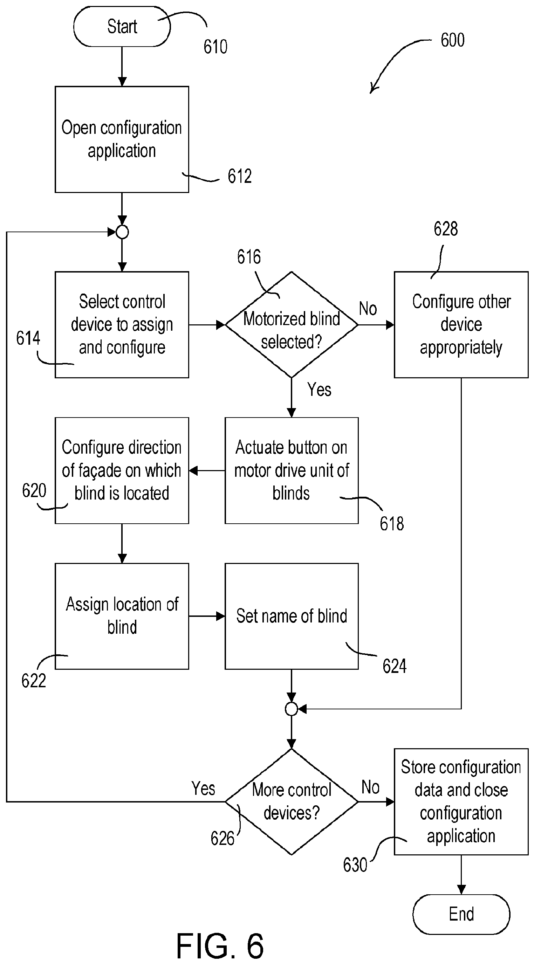

The system controller and/or the drive unit 230 of the blind system 210 may be configured to determine the elevation angle $a_e$ of the façade 310 on which the blind system 210 is mounted during a configuration procedure of the blind system 210. During the configuration procedure, the blind system 210 may be associated with one of the four different cardinal directions (e.g., north, east, south, and west) or the four different ordinal directions (e.g., north-east, south-east, south-west, and north-west). For example, the blind system 210 may be associated with the one of the eight different cardinal or ordinal directions that is closest to the actual elevation angle $a_e$ of the façade 310. The elevation angle $a_e$ of the façade 310 may be estimated during the configuration procedure using an electronic compass of a mobile device (e.g., the network device 144) as will be described in greater detail below with reference to FIG. 6.

Since the blind system 210 may be associated with (e.g., only associated with) one of the eight different cardinal or ordinal directions, the system controller and/or the drive unit 230 of the blind system 210 may consider a range of possible elevation angles $a_e$ of the façade 310 when determining the event times of the timeclock schedule. For example, the elevation angle $a_e$ of the façade 310 may range by about 45° for each of the eight different cardinal or ordinal directions. Each of the eight different cardinal or ordinal directions may be characterized by a center elevation angles $a_{e0}$ and two endpoint elevation angles $a_{e1}$, $a_{e2}$ as shown in Table 1.

TABLE 1

| Cardinal or Ordinal Direction | Center elevation angle $a_{e0}$ | First endpoint elevation angle $a_{e1}$ | Second endpoint elevation angle $a_{e2}$ |
|---|---|---|---|
| North | 180° | 157.5° | -157.5° |
| North-East | -135° | -157.5° | -112.5° |
| East | -90° | -112.5° | -67.5° |
| South-East | -45° | -67.5° | -22.5° |
| South | 0° | -22.5° | 22.5° |
| South-West | 45° | 22.5° | 67.5° |
| West | 90° | 67.5° | 112.5° |
| North-West | 135° | 112.5° | 157.5° |

The system controller and/or the drive unit 230 of the blind system 210 may recall the first and second endpoint elevation angles $a_{e1}$, $a_{e2}$ and may determine the event times for the timeclock schedule for the upcoming day based on the first and second endpoint elevation angles $a_{e1}$, $a_{e2}$. Although the example embodiment of Table 1 includes non-overlapping ranges of endpoint elevation angles $a_{e1}$, $a_{e2}$, it will be appreciated that the first and second endpoint elevation angles $a_{e1}$, $a_{e2}$ may be selected such that adjacent cardinal and ordinal directions include partially overlapping ranges of elevation angles between the first endpoint elevation angle $a_{e1}$ and the second endpoint elevation angle $a_{e2}$.

The system controller may be configured to generate timeclock schedules for a plurality (e.g., all) of the blind systems (e.g., motorized blinds) installed in the building 400. For example, the system controller may be configured to generate timeclock schedules (e.g., individual timeclock schedules) with different event times depending upon which façade of the building 400 on which each of the plurality of blind systems are located. The system controller may be configured to combine the timeclock schedules together to generate a system timeclock schedule for the entire building 400. The system controller may be configured to transmit the individual timeclock schedules to the blind systems on the respective façades of the building and/or transmit the system timeclock schedule to all of the blind systems in the building. Additionally and/or alternatively, the system controller may be configured to transmit commands for tilting the slats (e.g., based on the individual timeclock schedules) to each of the blind systems on the respective façades of the building. In addition, as previously mentioned, the drive units of each of the blind systems in the building may be configured to generate a respective individual timeclock schedule for controlling itself during the upcoming day.

The system controller and/or the drive unit 230 of the blind system 210 may be configured to associate one of the four different cardinal directions or the four different ordinal directions and a geographic region to determine different event times for the timeclock schedule. For example, a first façade located at a first set of geographic coordinates (e.g., global positioning system (GPS)) and facing (e.g., the façade may be associated with) one of the four different cardinal directions or the four different ordinal directions, the time periods during which the sun may be directly on the first façade can be determined. The system controller and/or the drive unit 230 of the blind system 210 may generate a timeclock schedule for each blind system on the first façade and facing the same one of the four different cardinal directions or the four different ordinal directions.

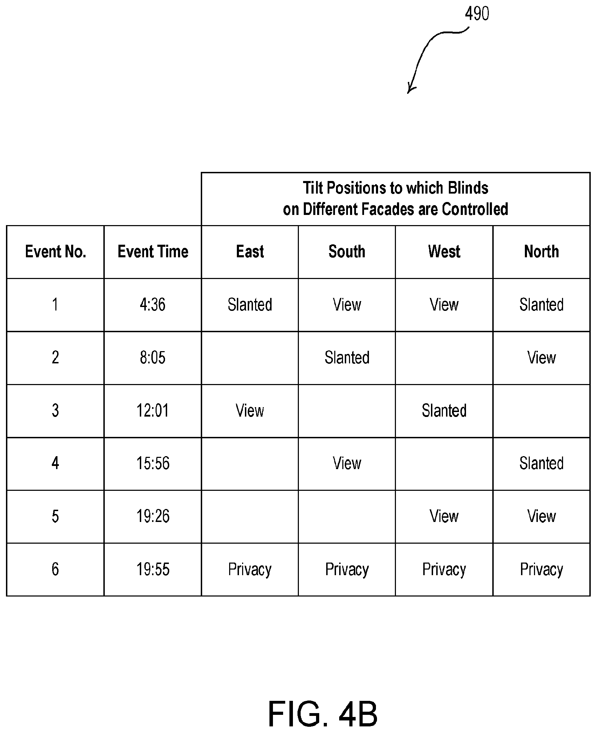

FIG. 4B shows an example system timeclock schedule 490 for a particular day of the year for a building located at a particular location. The blind systems of the building may be located on the North, East, South, and West façades of the building. The event times may be calculated based on when direct sun may be shining on the different façades. The blinds on the different façades may be controlled to the slanted, view, and privacy tilt positions at the different event times. Each column underneath the different façades may represent an individual timeclock schedule that may be transmitted to only the blind systems located on that façade.

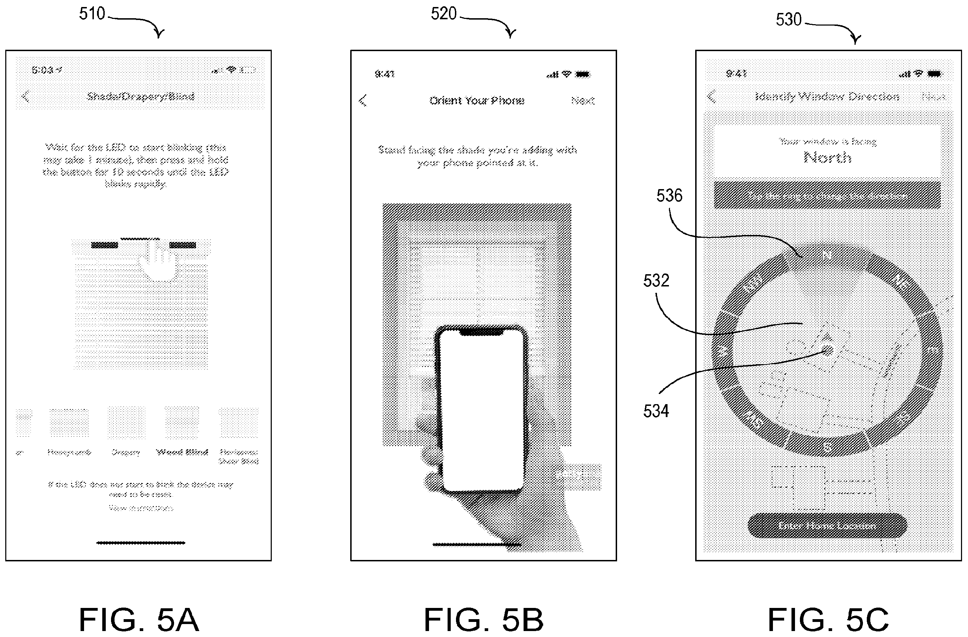

FIGs. 5A-5F are screenshots 510-560 of a configuration application running on a mobile device (e.g., the network device 144) that may be used to configure a motorized blind (e.g., the blind system 210). FIG. 6 is a flowchart of an example configuration procedure 600 for configuring a motorized blind (e.g., using a mobile device running the configuration application that displays the screenshots 510-560 shown in FIGs. 5A-5F). For example, the configuration procedure 600 may be completed by an installer of the motorized blind using the mobile device. The mobile device may be configured to communicate with a system controller (e.g., the system controller 150 of the load control system 100) and/or directly with the motorized blind. The configuration procedure 600 may start at 610. At 612, the installer may open the configuration application running on the mobile device. At 614, the installer may select a control device (e.g., the motorized blind) to configure and/or assign to the load control system and/or other control device. For example, the installer may choose a particular control device (e.g., a wood blind) on the configuration application as shown in the screenshot 510 in FIG. 5A. If a motorized blind is selected at 616, the configuration application may prompt the installer to actuate (e.g., press and hold) a button on a motor drive unit of the motorized blind at 618 as shown in the screenshot 510 of FIG. 5A. In response to the actuation of the button on the motorized blind, the system controller may be configured to assign the motorized blind to the load control system and/or another control device (e.g., an input device) of the load control system.

At 620, the installer may use the configuration application running on the mobile device to configure a facing direction of the façade on which the motorized blind is located (e.g., a line normal to the façade, such as the line 430 normal to the façade 310 shown in FIG. 4). For example, the configuration application may prompt the installer to orient (e.g., point) the mobile device (e.g., smart phone) towards the motorized blind that is being configured as shown in the screenshot 520 of FIG. 5B. The configuration application may display (e.g., in response to orienting the mobile device towards the motorized blind) a top view image 532 of the building (e.g., house) in which the motorized blind is installed and in which the installer is standing as shown in the screenshot 530 shown in FIG. 5C. The configuration application may also display a location indicator 534 (e.g., a dot) over the image 532 of the building. The location indicator 534 may indicate the location of the installer. The location indicator 534 may be surrounded by a compass indicator 536, which may also be overlaid on the image 532 of the building. The compass indicator 536 may be split into eight different segments to indicate the four different cardinal directions (e.g., north, east, south, and west) and the four different ordinal directions (e.g., north-east, south-east, south-west, and north-west) from the location of the building. The compass indicator 536 may indicate the direction that the mobile device is facing (e.g., directed) as determined by an internal electronic compass of the mobile device. The mobile device may be configured to set an orientation of the motorized blind in response to the direction indicated by the electronic compass.

Since the electronic compass of the mobile device may not be accurate (*e.g.*, particularly when located inside of a building), the installer may be able to actuate one of the segments of the compass indicator 536 to indicate the actual direction in which the mobile device is facing. For example, the installer may press one of the segments of the compass indicator 536 to select the direction corresponding to that segment. The mobile device may update the orientation of the motorized blind in response to the selected segment of the compass indicator 536. The orientation of the motorized blind *(e.g.,* the facing direction of the façade) may be stored in the mobile device and/or the system controller for use when controlling (*e.g.*, automatically controlling) the motorized blind.

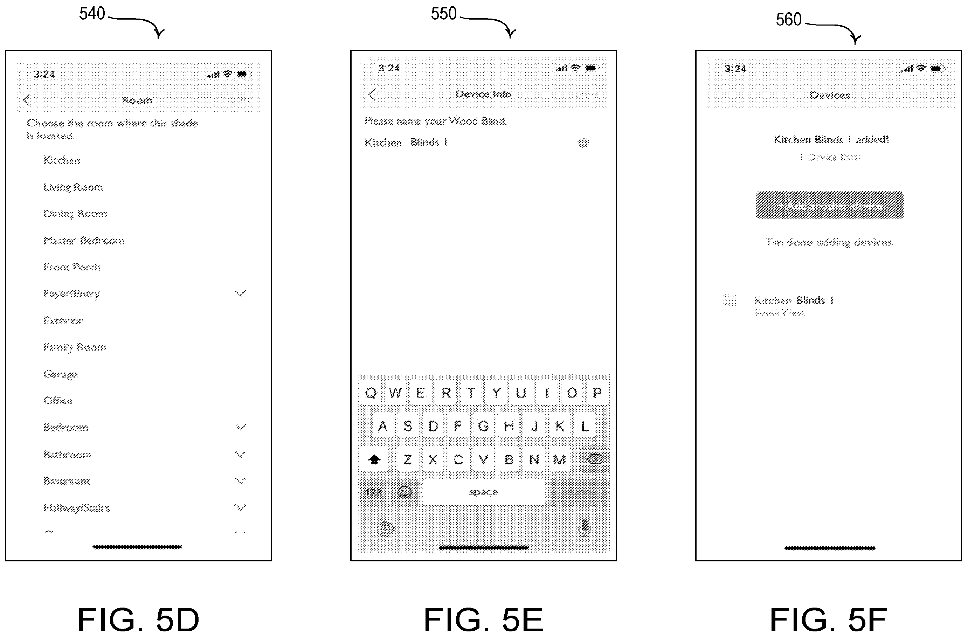

At 622, the installer may use the configuration application to assign a location *(e.g.,* room) of the motorized blind being configured as shown in the screenshot 540 of FIG. 5D. At 624, the installer may use the configuration application to enter a name of the motorized blind being configured as shown in the screenshot 550 of FIG. 5E. If there are more control devices to configure at 626, the installer may select an "add another device" button on the configuration application as shown in the screenshot 560 of FIG. 5F, and the configuration procedure 600 may loop around to allow another control device to be selected for configuration at 614. When a control device other than a motorized blind *(e.g.,* a dimmer switch, an electronic switch, a temperature control device, a remote control device, an occupancy sensor, a daylight sensor, *etc.)* is selected at 616, the installer may configure the other control device in an appropriate manner at 628. For example, the installer may actuate a button on the other control device to assign the control device to the load control system *(e.g.,* as in 618), assign a location of the control device *(e.g.,* as in 622), and/or enter a name of the control device *(e.g.,* as in 624). When there are no more control devices to configure at 626, the mobile device and/or system controller may store the configuration data established by the configuration procedure 600 and close the configuration application at 630, before the configuration procedure 600 exits.

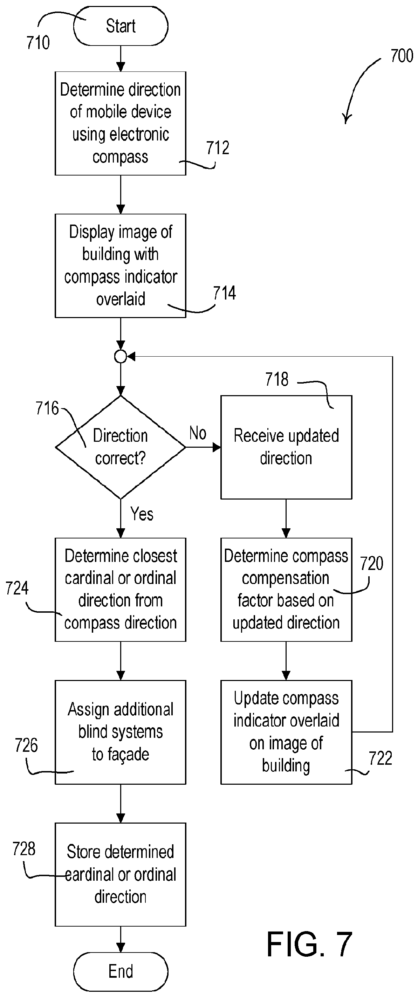

FIG. 7 is a flowchart of an example orientation configuration procedure 700 that may be executed to configure an orientation of a motorized blind *(e.g.,* the blind system 210). For example, the orientation configuration procedure 700 may be executed by a mobile device *(e.g.,* the network device 144) as part of a configuration procedure for the motorized blind *(e.g.,* at 614 of the configuration procedure 600). The orientation configuration procedure 700 may be executed to configure the orientations of all motorized blinds on a single façade *(e.g.,* to configure the facing direction of the façade). The orientation configuration procedure 700 may be executed by the mobile device at 710. At 712, the mobile device may determine the direction of the mobile device using an electronic compass of the mobile device. For example, the mobile device may determine the direction in units of degrees from true north at 712. At 714, the mobile device may display a top view image of the building in which the mobile device is located with a compass indicator overlaid over top of the image *(e.g.,* as shown in FIG. 5C). The top view image of the building allows the mobile device to receive a selection of a specific façade for the building and may allow a user to manually select or correct the direction associated with the façade. If the determined direction is not correct at 716, the mobile device may receive an updated direction at 718 *(e.g.,* as set by an installer via the configuration application). At 720, the mobile device may determine a compass compensation factor based on the updated direction. For example, the compass compensation factor may be the difference between the updated direction and the direction as determined by the electronic compass. The mobile device may use the compass compensation factor when determining the direction of the mobile device using an electronic compass for other façades of the building. At 722, the mobile device may update the compass indicator on the image of the building to indicate the updated direction.

When the direction is correct at 716, the mobile device may assign the façade to one of a plurality of predetermined directions based on the measured or corrected compass direction. For example, the predetermined directions may include cardinal and ordinal directions and the mobile device may determine the closest cardinal direction or ordinal direction to the determined orientation of the motorized blind *(e.g.,* the facing direction of the façade) at 724. As another example, the predetermined directions may include the cardinal directions, the ordinal directions, half-wind directions (NNE, ENE, ESE, SSE, SSW, WSW, WNW, and NNW), quarter-wind directions, and/or custom defined directions. At 726, the mobile device may assign additional blind systems 210 to the façade and assign the same one of the plurality of predetermined directions to each blind system on the façade. At 728, the mobile device may then store the determined direction in memory as the orientation of one or the motorized blinds on the present façade, and the orientation configuration procedure 700 may exit.

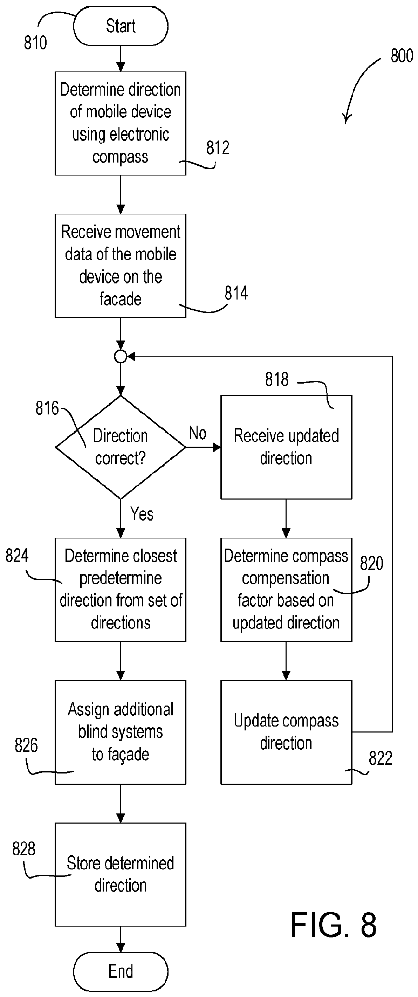

FIG. 8 is a flowchart of an example orientation configuration procedure 800 that may be executed to configure an orientation of a motorized blind *(e.g.,* the blind system 210). For example, the orientation configuration procedure 800 may be executed by a mobile device *(e.g.,* the network device 144) as part of a configuration procedure for the motorized blind *(e.g.,* at 614 of the configuration procedure 600). The orientation configuration procedure 800 may be executed to configure the orientations of all motorized blinds on a single façade *(e.g.,* to configure the facing direction of the façade). The orientation configuration procedure 800 is similar to the orientation procedure 700 discussed above, and similar description is not repeated herein. At 812, the mobile device may determine the location and /or direction of the mobile device using an electronic compass and/or a global positioning system (GPS) receiver of the mobile device. For example, the mobile device may determine the direction in units of degrees from true north at 812. At 814, the mobile device may record movement from a first point along the façade *(e.g.,* a first corner of the façade) to a second point along the façade *(e.g.,* a second corner of the façade). For example, the mobile device may be transported from the first point along the façade to the second point along the façade by a user. At 816, the direction of the façade may be determined based on the location and/or direction determined by the mobile device before and during movement of the mobile device on the façade. As discussed above, if the determined direction is not correct, the mobile device may receive an updated direction at 818, determine a compass compensation factor based on the updated direction at 820, and update direction of the façade at 822. The mobile device may use the compass compensation factor when determining the direction of the mobile device using an electronic compass for other façades of the building. Similarly, as discussed above, the orientation configuration procedure 800 determines the closest one of the predetermined directions at 824, may assign additional blind systems to the façade at 826, and stores the direction selected from the plurality of directions for each blind system on the façade.

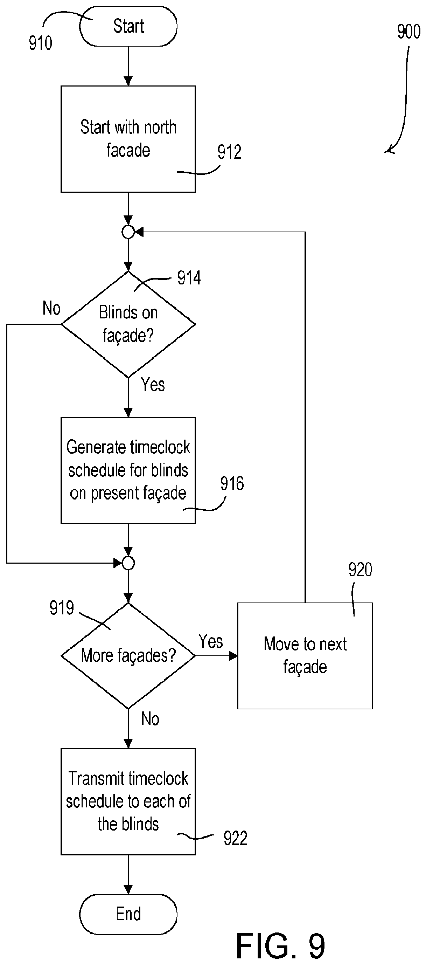

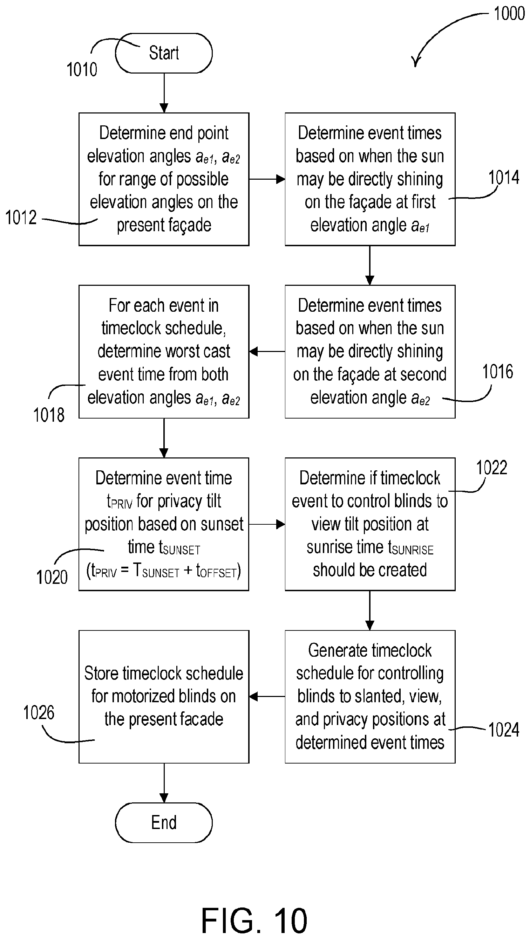

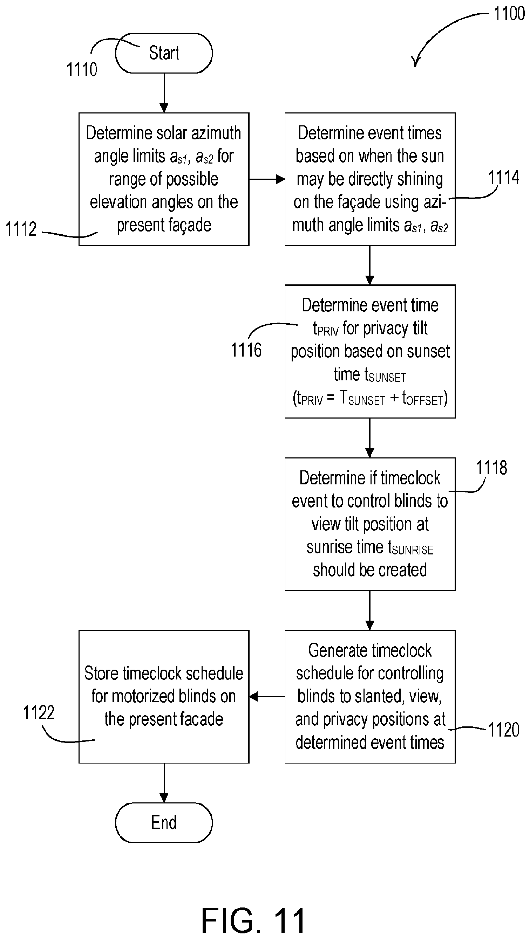

FIG. 9 is a flowchart of an example timeclock schedule configuration procedure 900 that may be executed to configure a timeclock schedule for controlling *(e.g.*, automatically controlling) tilt positions of one or more motorized blinds *(e.g.,* the motorized window treatments 116 and/or the blind system 210). The timeclock schedule configuration procedure 900 may be executed by a control device *(e.g.,* the system controller 150) of a load control system that includes the motorized blinds. For example, the timeclock schedule configuration procedure 900 may be executed periodically at 910, *e.g.,* once a day to configure timeclock schedules for the motorized blinds for the coming day. At 912, the control device may start with the north façade for configuring timeclock schedules for motorized blinds that may be located on the north façade of the building in which the load control system is installed. If there are blinds located on the present façade *(e.g.,* the north façade) at 914, the control device may configure a timeclock schedule for the blinds on the present façade at 916. For example, the control device may set the events of the timeclock schedule to control the tilt positions of the motorized blinds to maximize indirect sunlight entering the space while preventing direct sunlight from entering the space *(e.g.,* as will be described below with reference to FIGs. 10 and 11). If there are no blinds located on the present façade at 914, the control device may not configure timeclock schedules. If there are more façades on the building at 918, the control device may move to the next façade at 920. The control device may again determine, at 914, if the next façade has blinds. If the next façade has blinds, the control device may configure timeclock schedules for the next façade at 916 if there are motorized blinds on the next façade at 914. When there are no more façades on the building at 918, the control device may transmit *(e.g.,* wirelessly transmit) the timeclock schedules to each of the respective motorized blinds *(e.g.,* corresponding to the respective façade) at 920, before the timeclock schedule configuration procedure 900 exits. The motorized blinds may each store the respective timeclock schedule and execute respective events of the respective timeclock schedules at the pre-configured times over the coming day.

FIG. 10 is a flowchart of an example façade timeclock schedule configuration procedure 1000. The example façade timeclock schedule configuration procedure 1000 may be executed to configure a timeclock schedule for controlling *(e.g.,* automatically controlling) tilt positions of one or more motorized blinds *(e.g.,* the motorized window treatments 116 and/or the blind system 210) on a particular façade of a building in which the motorized blinds are located. The façade timeclock schedule configuration procedure 1000 may be executed by a control device *(e.g.,* the system controller 150) of a load control system that includes the motorized blinds. The façade timeclock schedule configuration procedure 1000 may be executed by the motorized blind for which the timeclock schedule is being configured. For example, the façade timeclock schedule configuration procedure 1000 may be executed periodically at 1010, *e.g.,* once a day to configure timeclock schedules for the motorized blinds for the coming day. The façade timeclock schedule configuration procedure 1000 may be executed, for example, at 916 of the timeclock configuration procedure 900 shown in FIG. 9. At 1012, the control device may determine the endpoint elevation angles $a_{e1}$, $a_{e2}$ for the present façade. For example, the control device may recall the endpoint elevation angles $a_{e1}$, $a_{e2}$ from memory depending upon the one of the cardinal or ordinal directions to which the present façade is associated *(e.g.,* as shown in Table 1 above).

Next, the control device may determine event times for controlling the motorized blinds on the present façade, for example, by separately considering both the first endpoint elevation angle $a_{e1}$ and the second endpoint elevation angle $a_{e2}$. For example, at 1014, the control device may determine event times for controlling the motorized blinds to prevent direct sunlight from shining into the space assuming that the elevation angle $a_e$ of the present façade is equal to the first endpoint elevation angle $a_{e1}$. At 1016, the control device may determine event times for controlling the motorized blinds to prevent direct sunlight from shining into the space assuming that the elevation angle $a_e$ of the present façade is equal to the second endpoint elevation angle $a_{e2}$. At both of the first endpoint elevation angle $a_{e1}$ and the second endpoint elevation angle $a_{e2}$, the control device may determine at 1014 and 1016 event times for controlling the motorized blinds to the slanted tilt position and/or the view tilt position depending upon the predicted position of the sun throughout the course of the upcoming day. For example, at 1014 and 1016, the control device may determine whether the sun is directly shining on the façade by calculating the profile angle $a_p$ of the sun at the first endpoint elevation angle $a_{e1}$ and the second endpoint elevation angle $a_{e2}$, respectively, and then determining if the profile angle $a_p$ is between 0° and 90°.

At 1018, the control device may determine the event times for the final timeclock schedule by comparing the event times as determined at the first endpoint elevation angle $a_{e1}$ *(e.g.,* at 1014) and the event times as determined at the second endpoint elevation angle $a_{e2}$ *(e.g.,* at 1016). For example, when comparing the event times at which the motorized blinds may be controlled to the slanted tilt position *(e.g.,* a fade-fighter tilt time $t_{FF}$ at the first endpoint elevation angle $a_{e1}$

and a fade-fighter tilt time $t_{FF}$ at the first endpoint elevation angle $a_{e2}$), the control device may choose the earlier of the two fade-fighter tilt times to be the fade-fighter tilt time in the final timeclock schedule. In addition, the control device may subtract a buffer time $t_{BUFFER}$ (*e.g.*, three minutes) from the earlier of the two fade-fighter tilt times before storing the fade-filter tilt time in the timeclock schedule. For example, a stored fade-fighter tilt time may include the buffer time. The buffer time $t_{BUFFER}$ may help to ensure that the sun does not directly shine into the space during the upcoming day. When comparing the event times at which the motorized blinds may be controlled to the view tilt position (*e.g.*, a view tilt time $t_{FF}$ at the first endpoint elevation angle $a_{e1}$ and a view tilt time $t_{FF}$ at the first endpoint elevation angle $a_{e2}$), the control device may choose the later of the two view tilt times to be the view tilt time in the final timeclock schedule. In addition, the control device may add a buffer time $t_{BUFFER}$ (*e.g.*, three minutes) to the later of the two view tilt times before storing the view tilt time in the timeclock schedule. For example, a stored view tilt time may include the buffer time. If there are two fade-filter tilt times and/or two view tilt times in each of the event times determined at the first endpoint elevation angle $a_{e1}$ and at the second endpoint elevation angle $a_{e2}$, the control device may compare the events times at the respective timeclock events to determine which event times to use in the final timeclock schedule.

At 1020, the control device may determine an event time at which the motorized blinds may be controlled to the privacy tilt position (*e.g.*, a privacy tilt time $t_{PRIV}$). The privacy tilt time $t_{PRIV}$ may be determined based on a sunset time $t_{SUNSET}$ for the upcoming day. For example, the control device set the privacy tilt time $t_{PRIV}$ to be an offset time $t_{OFFSET}$ (*e.g.*, 30 minutes) after the sunset time $t_{SUNSET}$. At 1022, the control device may determine an event time at which the motorized blinds may be controlled out of the privacy tilt position based on a sunrise time $t_{SUNRISE}$ for the upcoming day. For example, if the first fade-fighter tilt time $t_{FF1}$ is equal to the sunrise time $t_{SUNRISE}$ for the present façade (*e.g.*, the façade is facing in an eastward direction and the sun may be shining directly on the façade at sunrise), the control device does not need to create an additional timeclock event at the sunrise time $t_{SUNRISE}$ to cause the motorized blinds to move from the privacy position (*e.g.*, the motorized blinds will be controlled to the slanted tilt position at the sunrise time $t_{SUNRISE}$). However, if the first fade-fighter tilt time $t_{FF1}$ is equal to the sunrise time $t_{SUNRISE}$ for the present façade (*e.g.*, the sun may not be shining directly on the façade at sunrise), the control device may determine an event time for controlling the motorized blinds to the view tilt position at the sunrise time $t_{SUNRISE}$.

At 1024, the control device may generate a timeclock schedule for the motorized blinds on the present façade for the upcoming day for controlling the motorized blinds to the slanted tilt position, the view tilt position, and the privacy tilt position at the determined event times (*e.g.*, as determined at 1018 and 1020). For example, the control device may generate timeclock events for controlling the motorized blinds to the slanted tilt position at one or more determined fade-fighter tilt times $t_{FF}$, timeclock events for controlling the motorized blinds to the view tilt position at one or more determined view tilt times $t_{VIEW}$, and/or controlling the motorized blinds to the privacy tilt position at the privacy time $t_{PRIV}$ (*e.g.*, as shown in FIG. 4B). At 1026, the control device may store the timeclock schedule for the motorized blinds on the present façade (*e.g.*, an individual timeclock schedule), before the façade timeclock schedule configuration procedure 1000 exits. The façade timeclock schedule configuration procedure 1000 may be repeated (*e.g.*, successively) for one or more other façades of the building that include motorized blinds. Alternatively, the façade timeclock schedule configuration procedures 1000 for the façades of a building may be performed simultaneously for each of the façades of the building.

FIG. 11 is a flowchart of another example façade timeclock schedule configuration procedure 1100. The example façade timeclock schedule configuration procedure 1100 may be executed to configure a timeclock schedule for controlling (*e.g.*, automatically controlling) tilt positions of one or more motorized blinds (*e.g.*, the motorized window treatments 116 and/or the blind system 210) on a particular façade of a building in which the motorized blinds are located. The façade timeclock schedule configuration procedure 1100 may be executed by a control device (*e.g.*, the system controller 150) of a load control system that includes the motorized blinds. The façade timeclock schedule configuration procedure 1100 may also be executed by the motorized blind for which the timeclock schedule is being configured, for example, when the motorized blind is configured to execute a timeclock. For example, the façade timeclock schedule configuration procedure 1100 may be executed periodically at 1110, *e.g.*, once a day to configure timeclock schedules for the motorized blinds for the coming day. The façade timeclock schedule configuration procedure 1100 may be executed, for example, at 816 of the timeclock configuration procedure 800 shown in FIG. 8.

At 1112, the control device may set a solar azimuth angle range by determining solar azimuth angle limits $a_{s1}$, $a_{s2}$ for the façade 310 based on the elevation angle $a_e$ of the façade. The control device may set the solar azimuth angle limits $a_{s1}$, $a_{s2}$ based on a total façade angle $a_{total}$ (*e.g.*, approximately 180°). For example, the first solar azimuth angle limit $a_{s1}$ may be set equal to the first endpoint elevation angle $a_{e1}$ minus half of the total façade angle $a_{total}$ (*e.g.*, $a_{s1} = a_{e1} - [a_{total}/2]$), and the second solar azimuth angle limit $a_{s2}$ may be set equal to the second endpoint elevation angle $a_{e2}$ plus half of the total façade angle $a_{total}$ (*e.g.*, $a_{s2} = a_{e2} + [a_{total}/2]$). The control device may recall the endpoint elevation angles $a_{e1}$, $a_{e2}$ from memory depending upon the one of the cardinal or ordinal directions to which the present façade is associated (e.g., as shown in Table 1 above). In addition, a buffer angle $a_{buff}$ (*e.g.*, approximately 5°) may be appended to both the solar azimuth angle limits $a_{s1}$, $a_{s2}$ (*e.g.*, $a_{s1} = a_{e1} - [a_{total}/2] - a_{buff}$, and $a_{s2} = a_{e2} + [a_{total}/2] + a_{buff}$).

At 1114, the control device may determine event times for controlling the motorized blinds on the present façade to prevent direct sunlight from shining into the space. The control device may determine event times for controlling the motorized blinds to the slanted tilt position and/or the view tilt position depending upon the predicted position of the sun throughout the course of the upcoming day. For example, at 1114, the control device may determine whether the sun is directly shining on the façade by calculating the solar azimuth angle $a_s$ of the sun, and then determining if the profile angle $a_p$ is between the solar azimuth angle limits $a_{s1}$, $a_{s2}$ for the façade.

At 1116, the control device may determine an event time at which the motorized blinds may be controlled to the privacy tilt position (e.g., a privacy tilt time $t_{PRIV}$). The privacy tilt time $t_{PRIV}$ may be determined based on a sunset time $t_{SUNSET}$ for the upcoming day. For example, the control device set the privacy tilt time $t_{PRIV}$ to be an offset time $t_{OFFSET}$ (e.g., 30 minutes) after the sunset time $t_{SUNSET}$.

At 1118, the control device may determine an event time at which the motorized blinds may be controlled out of the privacy tilt position based on a sunrise time $t_{SUNRISE}$ for the upcoming day. For example, if the first fade-fighter tilt time $t_{FF1}$ is equal to the sunrise time $t_{SUNRISE}$ for the present façade (e.g., the façade is facing in an eastward direction and the sun may be shining directly on the façade at sunrise), the control device does not need to create an additional timeclock event at the sunrise time $t_{SUNRISE}$ to cause the motorized blinds to move from the privacy position (e.g., the motorized blinds will be controlled to the slanted tilt position at the sunrise time $t_{SUNRISE}$). However, if the first fade-fighter tilt time $t_{FF1}$ is equal to the sunrise time $t_{SUNRISE}$ for the present façade (e.g., the sun may not be shining directly on the façade at sunrise), the control device may determine an event time for controlling the motorized blinds to the view tilt position at the sunrise time $t_{SUNRISE}$.

At 1120, the control device may generate a timeclock schedule for the motorized blinds on the present façade for the upcoming day for controlling the motorized blinds to the slanted tilt position, the view tilt position, and the privacy tilt position at the determined event times (e.g., as determined at 1114 and 1116). For example, the control device may generate timeclock events for controlling the motorized blinds to the slanted tilt position at one or more determined fade-fighter tilt times $t_{FF}$, timeclock events for controlling the motorized blinds to the view tilt position at one or more determined view tilt times $t_{VIEW}$, and/or controlling the motorized blinds to the privacy tilt position at the privacy time $t_{PRIV}$ (e.g., as shown in FIG. 4B).

At 1122 the control device may store the timeclock schedule for the motorized blinds on the present façade (e.g., an individual timeclock schedule), before the façade timeclock schedule configuration procedure 1100 exits. The façade timeclock schedule configuration procedure 1100 may be repeated (e.g., successively) for one or more other façades of the building that include motorized blinds. Alternatively, the façade timeclock schedule configuration procedures 1100 for the façades of a building may be performed simultaneously for each of the façades of the building.

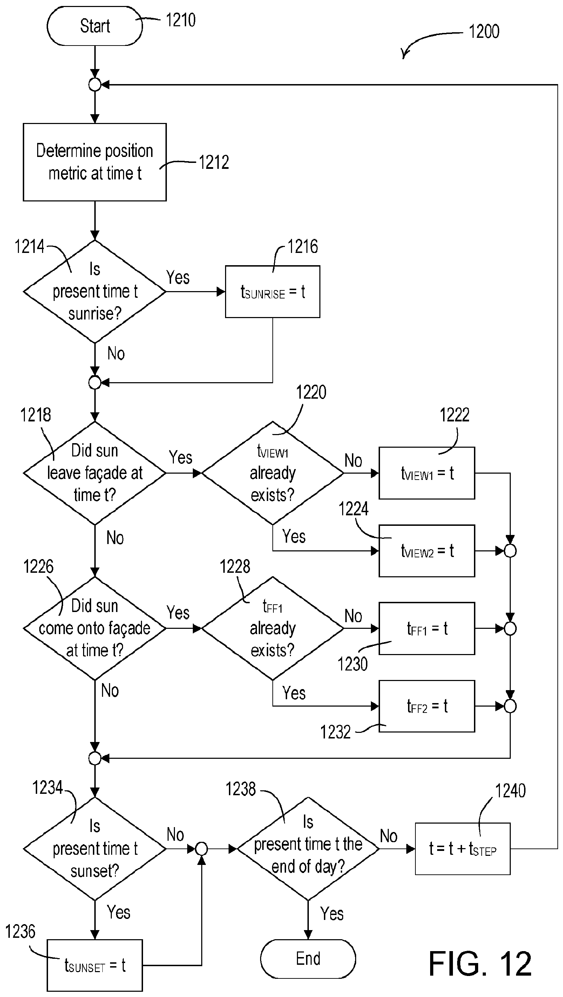

FIG. 12 is a flowchart of an example timeclock event configuration procedure 1200 that may be executed to configure timeclock events of a timeclock schedule for controlling (e.g., automatically controlling) tilt positions of one or more motorized blinds (e.g., the motorized window treatments 116 and/or the blind system 210). The timeclock event configuration procedure 1200 may be executed by a control device (e.g., the system controller 150) of a load control system that includes the motorized blinds. The timeclock event configuration procedure 1200 may be executed by the motorized blind for which the timeclock schedule is being configured. For example, the timeclock event configuration procedure 1200 may be executed at 1210 to configure timeclock events for timeclock schedules for the motorized blinds for the coming day. The timeclock event configuration procedure 1200 may be executed, for example, at 1014 and 1016 of the façade timeclock schedule configuration procedure 1000 shown in FIG. 10 and/or at 1114 of the façade timeclock schedule configuration procedure 1100 shown in FIG. 11.

During the façade timeclock event configuration procedure 1200, the control device may step through each minute of a day and calculate a position metric of the sun (e.g., a profile angle $a_p$ and/or a solar azimuth angle $a_s$ of the sun) at each minute to determine if the motorized blinds should be controlled to the slanted tilt position and/or the view tilt position. At 1212, the control device may determine the position metric of the sun (e.g., the profile angle $a_p$ and/or the solar azimuth angle $a_s$ of the sun) of the sun at the present façade at a present time $t$. For example, at 1212, the control device may calculate the profile angle $a_p$ of the sun when executing the façade timeclock schedule configuration procedure 1000 shown in FIG. 10, and may calculate the solar azimuth angle $a_s$ of the sun when executing the façade timeclock schedule configuration procedure 1100 shown in FIG. 11. The present time $t$ may be initialized to zero (e.g., midnight) when the timeclock event configuration procedure 1200 is started. For example, the control device may calculate the profile angle $a_p$ and/or the solar azimuth angle $a_s$ at 1212 using the equations 1-6 shown above. The control device may calculate the profile angle $a_p$ and/or the solar azimuth angle $a_s$ as a function of the longitude $\lambda$ and the latitude $\varPhi$ of the building in which the motorized blinds may be installed. The control device may calculate an elevation angle $a_e$ of the present façade. The timeclock event configuration procedure 1200 may be executed multiple times with the elevation angle $a_e$ set to the first and second endpoint elevation angles $a_{e1}$, $a_{e2}$ (e.g., as shown at 1014 and 1016 of the façade timeclock schedule configuration procedure 1000). The standard time $t_s$ of the equations 1-6 may be set to the present time $t$.

At 1214, the control device may determine if the present time $t$ is at sunrise for the upcoming day. The control device may determine that the present time $t$ is at sunrise by calculating a profile angle $a_{p-east}$ for an elevation angle $a_e$ directed due east (e.g., for an elevation angle $a_e$ of -90°). If the profile angle $a_{p-east}$ for the elevation angle $a_e$ directed due east just became greater than 0° (e.g., indicates that the sun may have just passed the horizon and became incident on the façade), the control device may conclude that the present time $t$ is at sunrise. If the present time $t$ is at sunrise at 1214, the control device may set a sunrise time $t_{SUNRISE}$ equal to the present time t at 1216.

At 1218, the control device may determine if the determined position metric of the sun indicates that the sun just left the present façade (e.g., stops shining directly on the façade) at the present time t. For example, the control device may determine that the sun just left the present façade at the present time $t$ by determining if a calculated profile angle $a_p$ at a previous time was inside of the range of 0° to 90° and a calculated profile angle $a_p$ at the present time $t$ is now outside of the range of 0° to 90°. In addition, the control device may determine that the sun just left the present façade at the present time $t$ by determining if a calculated solar azimuth angle $a_s$ at a previous time was inside of the range between the azimuth angle limits $a_{s1}$, $a_{s2}$, and a calculated solar azimuth angle $a_s$ at the present time $t$ is now outside of the range between the azimuth angle limits $a_{s1}$, $a_{s2}$. The previous time may be one minute prior to the present time. The previous time may be denoted as $t-1$. If the control device determines that the sun just left the present façade at the present time $t$ at 1218 and a first view tilt time $t_{VIEW1}$ does not already exist at 1220, the control device may set the first view tilt time $t_{VIEW1}$ to the present time $t$ at 1222. If the first view tilt time $t_{VIEW1}$ already exists at 1220, the control device may set a second view tilt time $t_{VIEW2}$ to the present time $t$ at 1224.

If the control device determines that the sun did not just leave (e.g., sunlight is still incident on) the present façade at 1218, the control device may determine if the determined position metric of the sun indicates that the sun just came onto (e.g., recently became incident on and/or began shining directly on the façade) the present façade at the present time t at 1226. For example, the control device may determine that the sun just came onto the present façade at the present time $t$ by determining if a calculated profile angle $a_p$ at the previous time was outside of the range of 0° to 90° and a calculated profile angle $a_p$ at the present time $t$ is now inside of the range of 0° to 90°. In addition, the control device may determine that the sun just came onto the present façade at the present time $t$ by determining if a calculated solar azimuth angle $a_s$ at the previous time was outside of the range between the azimuth angle limits $a_{s1}$, $a_{s2}$, and a calculated solar azimuth angle $a_s$ at the present time $t$ is now inside of the range between the azimuth angle limits $a_{s1}$, $a_{s2}$. The control device may determine whether a first fade-fighter time $t_{FF1}$ is defined (e.g., already exists). If the control device determines that the sun just came onto the present façade at the present time t at 1226 and the first fade-fighter tilt time $t_{FF1}$ does not already exist at 1228, the control device may set the first fade-fighter tilt time $t_{FF1}$ to the present time $t$ at 1230. If the first fade-fighter tilt time $t_{FF1}$ already exists at 1228, the control device may set a second fade-fighter tilt time $t_{FF2}$ to the present time t at 1230.

At 1234, the control device may determine if the present time t is at sunset for the upcoming day. The control device may determine that the present time t is at sunset by calculating a profile angle $a_{p-west}$ for an elevation angle $a_e$ directed due west (e.g., for an elevation angle $a_e$ of 90°). If the profile angle $a_{p-west}$ for the elevation angle $a_e$ directed due west just became less than 0°(e.g., indicates that the sun may have just passed the horizon and is no longer incident on the façade), the control device may conclude that the present time $t$ is at sunset. If the present time $t$ is at sunset at 1234, the control device may set a sunrise time $t_{SUNSET}$ equal to the present time $t$ at 1236. If the present time $t$ is not equal to the end of the upcoming day (e.g., midnight) at 1238, the control device may increase the present time $t$ by a step value $t_{STEP}$ (e.g., one minute) at 1240, and the timeclock event configuration procedure 1200 may loop around to calculate the profile angle $a_p$ of the sun at the updated present time $t$ at 1212. When the present time $t$ is equal to the end of the upcoming day at 1238, the timeclock event configuration procedure 1200 may exit.

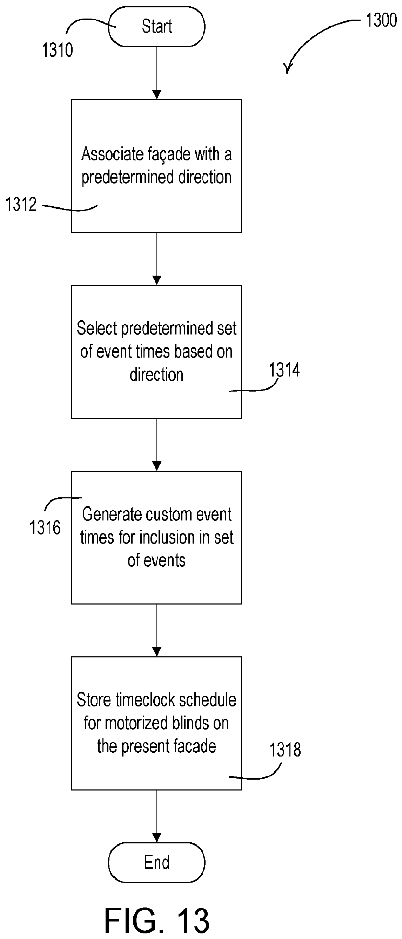

FIG. 13 is a flowchart of an example façade timeclock schedule configuration procedure 1300. The example façade timeclock schedule configuration procedure 1300 may be executed to configure a timeclock schedule for controlling (e.g., automatically controlling) tilt positions of one or more motorized blinds (e.g., the motorized window treatments 116 and/or the blind system 210) on a particular façade of a building in which the motorized blinds are located. The façade timeclock schedule configuration procedure 1300 may be executed by a control device (e.g., the system controller 150 and/or the network device 114) of a load control system that includes the motorized blinds. The façade timeclock schedule configuration procedure 1300 may be also executed by the motorized blind for which the timeclock schedule is being configured, for example, when the motorized blind is configured to execute a timeclock. For example, the façade timeclock schedule configuration procedure 1300 may be executed periodically at 1310, e.g., once a day, once a week, once a month, once a year, etc. to configure timeclock schedules for the motorized blinds for the coming day. The façade timeclock schedule configuration procedure 1300 may be executed, for example, at 816 of the timeclock configuration procedure 800 shown in FIG. 8.

At 1312, the control device may associate the present façade with one of a predetermined set of directions. For example, the control device may associate the present façade with one of a cardinal or ordinal direction, one of a cardinal, ordinal, or half-wind direction, one of a cardinal, ordinal, half-wind, or quarter-wind direction, one of a user-defined set of directions, etc. At 1314, the control device may select a predetermined set of event times for controlling the motorized blinds on the present façade, for example, a predetermined set of event times based on the associated one of the predetermined set of directions. For example, the control device may include a set of predetermined events for each of the potential directions of the façade. The set of predetermined events may be calculated using any suitable method, such as, for example, as discussed above with respect to FIG. 10. The predetermined set of event times may include timeclock events for controlling the motorized blinds to the slanted tilt position at one or more determined fade-fighter tilt times $t_{FF}$,

timeclock events for controlling the motorized blinds to the view tilt position at one or more determined view tilt times $t_{VIEW}$, and/or controlling the motorized blinds to the privacy tilt position at the privacy time $t_{PRIV}$ (e.g., as shown in FIG. 4B).

The predetermined set of event times may include an event time at which the motorized blinds may be controlled to the privacy tilt position (e.g., a privacy tilt time $t_{PRIV}$). The privacy tilt time $t_{PRIV}$ may be determined based on a sunset time $t_{SUNSET}$ for the upcoming day. For example, the control device set the privacy tilt time $t_{PRIV}$ to be an offset time $t_{OFFSET}$ (e.g., 30 minutes) after the sunset time $t_{SUNSET}$. Similarly, the predetermined set of event times may determine an event time at which the motorized blinds may be controlled out of the privacy tilt position based on a sunrise time $t_{SUNRISE}$ for the upcoming day. For example, if the first fade-fighter tilt time $t_{FF1}$ is equal to the sunrise time $t_{SUNRISE}$ for the present façade (e.g., the façade is facing in an eastward direction and the sun may be shining directly on the façade at sunrise), the predetermined set of event times does not need to include an additional timeclock event at the sunrise time $t_{SUNRISE}$ to cause the motorized blinds to move from the privacy position (e.g., the motorized blinds will be controlled to the slanted tilt position at the sunrise time $t_{SUNRISE}$). However, if the first fade-fighter tilt time $t_{FF1}$ is equal to the sunrise time $t_{SUNRISE}$ for the present façade (e.g., the sun may not be shining directly on the façade at sunrise), the predetermined set of events may include an event time for controlling the motorized blinds to the view tilt position at the sunrise time $t_{SUNRISE}$.

At 1316, the control device may generate one or more custom events for inclusion in the predetermined set of events obtained at 1312. For example, a user may set an additional $t_{PRIV}$ for transitioning a blind system to the privacy tilt angle. Similarly, a user may remove one or more events, such as a fade-fighter tilt time $t_{FF}$ to maintain the blind system 210 in the previous configuration (e.g., view tilt position or privacy tilt position). At 1316, a user may set one or more custom settings for one or more tilt positions, such as a custom fade fighter tilt percentage greater or lesser than 25%.

At 1318, the control device may store the timeclock schedule for the motorized blinds on the present façade (e.g., an individual timeclock schedule), before the façade timeclock schedule configuration procedure 1300 exits. The façade timeclock schedule configuration procedure 1300 may be repeated (e.g., successively) for one or more other façades of the building that include motorized blinds. Alternatively, the façade timeclock schedule configuration procedures 1300 for the façades of a building may be performed simultaneously for each of the façades of the building.

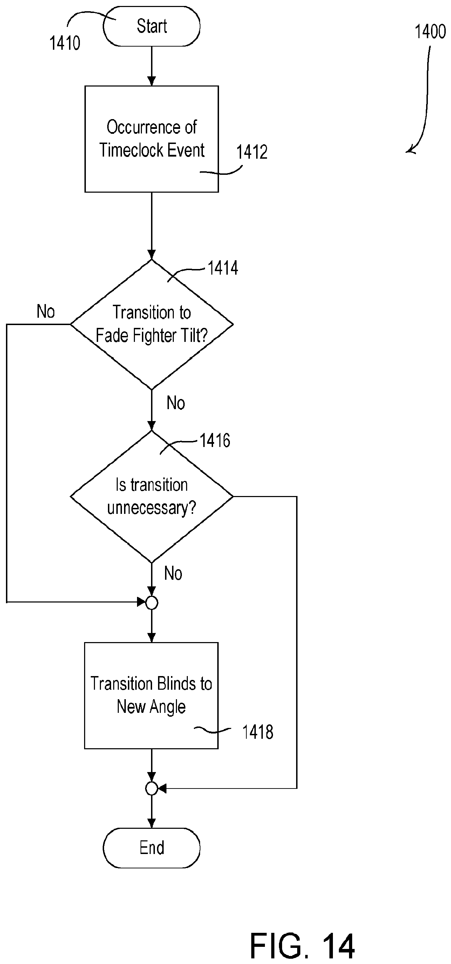

FIG. 14 is a flowchart of an example timeclock schedule execution 1400 for a control device including a control-source device. At 1412, the control device or blind system detects a time matching an event time contained in a façade timeclock schedule. The event may include a transition to a fade fighter tilt position, a view tilt position, or a privacy tilt position. At 1414, the control device determines whether the event is a transition to a fade fighter tilt position. If the event is not a transition to a fade fighter tilt position, the control device executes the event and, at 1418, transitions the blind system 210 to the tilt position indicated by the event in the timeclock schedule.

If the event is a transition to a fade fighter tilt position, the control device, at 1416, determines whether a transition to a fade fighter tilt position is necessary. For example, the control device may receive a signal from a control-source device, such as control-source device 1400 described in greater detail below. The control-source device may include a sensor configured to detect one or more environmental parameters indicative of whether a transition to the fade fighter tilt position is necessary, such as, for example, an occupancy sensor, a sunlight sensor, a window sensor, etc. For example, if the control-source device is configured to detect direct sunlight (e.g., a daylight sensor, etc.), the control-source device may prevent transition to the fade fighter tilt position when a minimal amount of sunlight (e.g., no sunlight) is detected. As another example, the control device may receive weather data for a geographic area including the façade. If the weather stream indicates there is no direct sunlight, e.g., it is cloudy, raining, etc., the control device may not transition to the fade finder tilt position (as there is no direct sunlight on the façade).

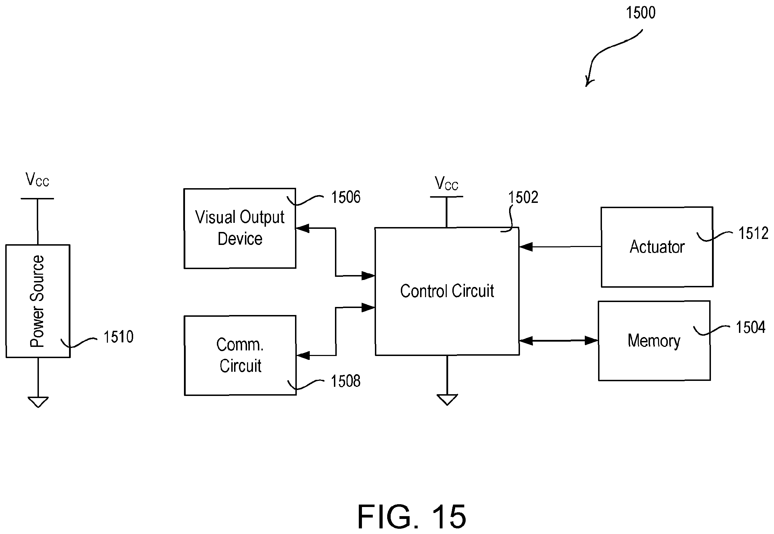

FIG. 15 is a block diagram illustrating an example computing device 1500. As described herein, a computing device may include a network device or a server device (e.g., authorization server, resource server, and/or third party server). The computing device 1500 may include a control circuit 1502 for controlling the functionality of the computing device 1500. The control circuit 1502 may include one or more general purpose processors, special purpose processors, conventional processors, digital signal processors (DSPs), microprocessors, integrated circuits, a programmable logic device (PLD), application specific integrated circuits (ASICs), or the like. The control circuit 1502 may perform signal coding, data processing, power control, input/output processing, or any other functionality that enables the computing device 1500 to perform as described herein. The control circuit 1502 may store information in and/or retrieve information from the memory 1504. The memory 1504 may include a non-removable memory and/or a removable memory. The non-removable memory may include random-access memory (RAM), read-only memory (ROM), a hard disk, or any other type of non-removable memory storage. The removable memory may include a subscriber identity module (SIM) card, a memory stick, a memory card, or any other type of removable memory.

The computing device 1500 may include a communications circuit 1508 for transmitting and/or receiving information. The communications circuit 1508 may perform wireless and/or wired communications. The communications circuit 1508 may include an RF transceiver or other circuit capable of performing wireless communications via an antenna. Communications circuit 1508 may be in communication with control circuit 1502 for transmitting and/or receiving information.

The control circuit 1502 may be in communication with an output device 1506, such as a visual output device *(e.g.,* a display) and/or an audible output device *(e.g.,* a speaker), for providing information to a user. The control circuit 1502 and/or the output device 1506 may generate a user interface, *e.g.,* a graphical user interface (GUI), for being displayed on the computing device 1500. The output device 1506 and the control circuit 1502 may be in two-way communication, as the display 1506 may include a touch screen module capable of receiving a user input and providing such user input to the control circuit 1502. The computing device 1500 may include an actuator *1512 (e.g.,* one or more buttons) that may be actuated by a user to communicate user selections to the control circuit 1502.

Each of the modules within the computing device 1500 may be powered by a power source 1510. The power source 1510 may include an AC power supply or DC power supply, for example. The power source 1510 may generate a supply voltage Vcc for powering the modules within the computing device 1500.

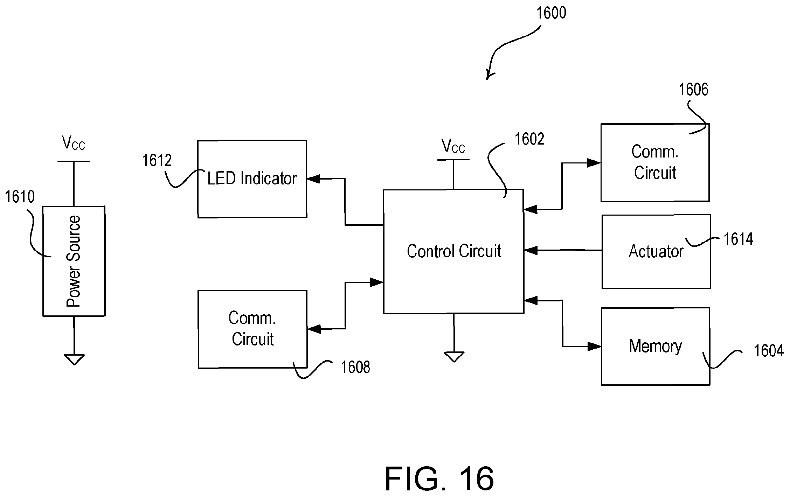

FIG. 16 is a block diagram illustrating an example system controller 1600 (such as system controller 150, described herein). The system controller 1600 may include a control circuit 1602 for controlling the functionality of the system controller 1600. The control circuit 1602 may include one or more general purpose processors, special purpose processors, conventional processors, digital signal processors (DSPs), microprocessors, integrated circuits, a programmable logic device (PLD), application specific integrated circuits (ASICs), or the like. The control circuit 1602 may perform signal coding, data processing, power control, input/output processing, or any other functionality that enables the system controller 1600 to perform as described herein. The control circuit 1602 may be configured to execute a timeclock. The control circuit 1602 may store information in and/or retrieve information from the memory 1604. The memory 1604 may include a non-removable memory and/or a removable memory. The non-removable memory may include random-access memory (RAM), read-only memory (ROM), a hard disk, or any other type of non-removable memory storage. The removable memory may include a subscriber identity module (SIM) card, a memory stick, a memory card, or any other type of removable memory. The memory 1604 may be configured to store a timeclock schedule defining event times and associated commands for controlling control-target devices.

The system controller 1600 may include a communications circuit 1606 for transmitting and/or receiving information. The communications circuit 1606 may perform wireless and/or wired communications. The system controller 1600 may also, or alternatively, include a communications circuit 1608 for transmitting and/or receiving information. The communications circuit 1606 may perform wireless and/or wired communications. The communications circuits 1606 and 1608 may be in communication with control circuit 1602. The control circuit 1602 may be configured to transmit messages including commands for controlling control-target devices via the communication circuit 1606. The control circuit 1602 may be configured to transmit message including command for controlling the control-target devices at the event times of the timeclock schedule. The communications circuits 1606 and 1608 may include RF transceivers or other communications modules capable of performing wireless communications via an antenna. The communications circuit 1606 and communications circuit 1608 may be capable of performing communications via the same communication channels or different communication channels. For example, the communications circuit 1606 may be capable of communicating via a first wireless communication link, *e.g.,* with a network device, over a network, *etc.,* and the communications circuit 1608 may be capable of communicating via a second wireless communication link, *e.g.*, with control devices and/or other devices in the load control system.

The control circuit 1602 may be in communication with an LED indicator 1612 for providing indications to a user. The control circuit 1602 may be in communication with an actuator 1614 *(e.g.,* one or more buttons) that may be actuated by a user to communicate user selections to the control circuit 1602. For example, the actuator 1614 may be actuated to put the control circuit 1602 in an association mode and/or communicate association messages from the system controller 1600.

Each of the modules within the system controller 1600 may be powered by a power source 1610. The power source 1610 may include an AC power supply or DC power supply, for example. The power source 1610 may generate a supply voltage Vcc for powering the modules within the system controller 1600.

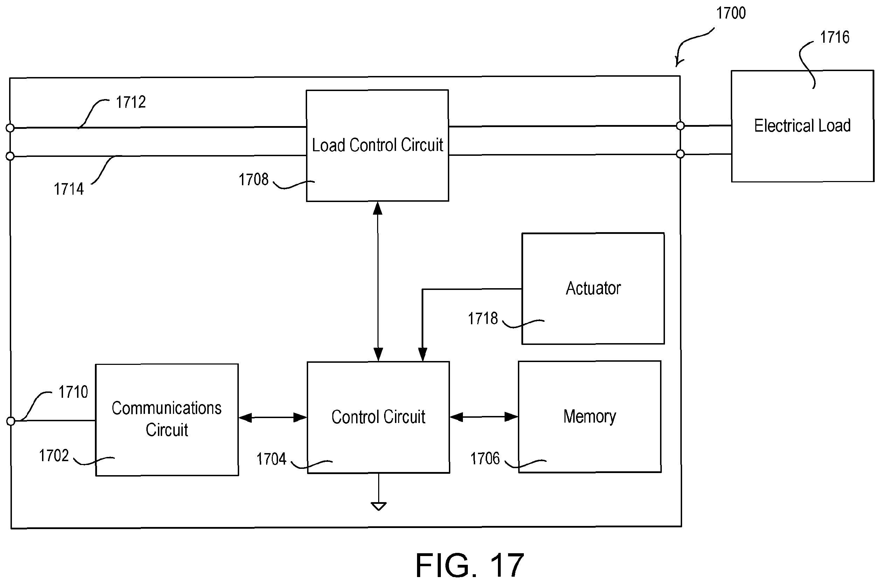

FIG. 17 is a block diagram illustrating an example control-target device, *e.g.,* a load control device 1700, as described herein. The load control device 1700 may be a dimmer switch, an electronic switch, an electronic ballast for lamps, an LED driver for LED light sources, an AC plug-in load control device, a temperature control device *(e.g.,* a thermostat), a motor drive unit for a motorized window treatment, or other load control device. The load control device 1700 may include a communications circuit 1702. The communications circuit 1702 may include a receiver, an RF transceiver, or other communications module capable of performing wired and/or wireless communications via communications link 1710. The communications circuit 1702 may be in communication with control circuit 1704. The control circuit 1704 may include one or more general purpose processors, special purpose processors, conventional processors, digital signal processors (DSPs), microprocessors, integrated circuits, a programmable logic device (PLD), application specific integrated circuits (ASICs), or the like. The control circuit 1704 may perform signal coding, data processing, power control, input/output processing, or any other functionality that enables the load control device 1700 to perform as described herein.

The control circuit 1704 may store information in and/or retrieve information from the memory 1706. For example, the memory 1706 may maintain a registry of associated control devices and/or control instructions. The memory 1706 may include a non-removable memory and/or a removable memory. The load control circuit 1708 may receive instructions from the control circuit 1704 and may control the electrical load 1716 based on the received instructions. The load control circuit 1708 may send status feedback to the control circuit 1704 regarding the status of the electrical load 1716. The load control circuit 1708 may receive power via the hot connection 1712 and the neutral connection 1714 and may provide an amount of power to the electrical load 1716. The electrical load 1716 may include any type of electrical load.

The control circuit 1704 may be in communication with an actuator 1718 *(e.g., one or more buttons)* that may be actuated by a user to communicate user selections to the control circuit 1704. For example, the actuator 1718 may be actuated to put the control circuit 1704 in an association mode and/or communicate association messages from the load control device 1700.

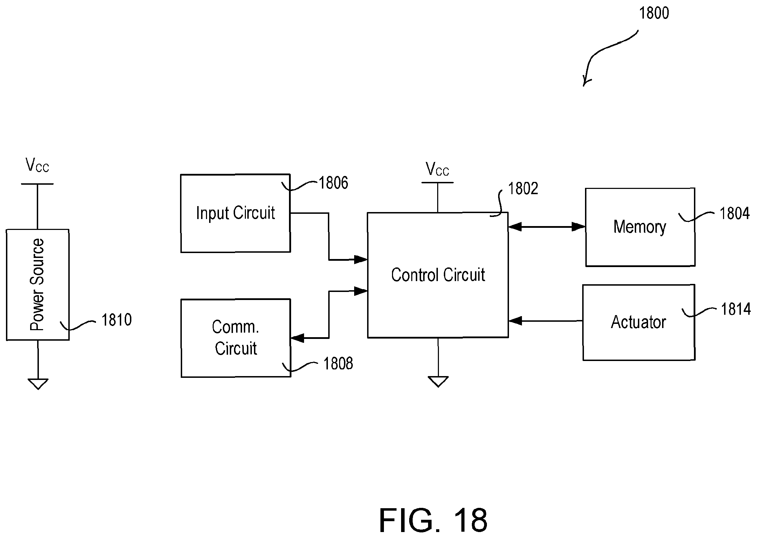

FIG. 18 is a block diagram illustrating an example control-source device 1800 as described herein. The control-source device 1800 may be a remote control device, an occupancy sensor, a daylight sensor, a window sensor, a temperature sensor, and/or the like. The control-source device 1800 may include a control circuit 1802 for controlling the functionality of the control-source device 1800. The control circuit 1802 may include one or more general purpose processors, special purpose processors, conventional processors, digital signal processors (DSPs), microprocessors, integrated circuits, a programmable logic device (PLD), application specific integrated circuits (ASICs), or the like. The control circuit 1802 may perform signal coding, data processing, power control, input/output processing, or any other functionality that enables the control-source device 1800 to perform as described herein.

The control circuit 1802 may be in communication with an actuator 1814 *(e.g., one or more buttons)* that may be actuated by a user to communicate user selections to the control circuit 1802. For example, the actuator 1814 may be actuated to put the control circuit 1802 in an association mode and/or communicate association messages from the control-source device 1800. The control circuit 1802 may store information in and/or retrieve information from the memory 1804. The memory 1804 may include a non-removable memory and/or a removable memory, as described herein.

The control-source device 1800 may include a communications circuit 1808 for transmitting and/or receiving information. The communications circuit 1808 may transmit and/or receive information via wired and/or wireless communications. The communications circuit 1808 may include a transmitter, an RF transceiver, or other circuit capable of performing wired and/or wireless communications. The communications circuit 1808 may be in communication with control circuit 1802 for transmitting and/or receiving information.

The control circuit 1802 may be in communication with an input circuit 1806. The input circuit 1806 may include an actuator *(e.g., one or more buttons)* or a sensor circuit *(e.g., an occupancy sensor circuit, a daylight sensor circuit, or a temperature sensor circuit)* for receiving input that may be sent to a device for controlling an electrical load. For example, the control-source device may receive input from the input circuit 1806 to put the control circuit 1802 in an association mode and/or communicate association messages from the control-source device. The control circuit 1802 may receive information from the input circuit 1806 *(e.g., an indication that a button has been actuated or sensed information)*. Each of the modules within the control-source device 1800 may be powered by a power source 1810.

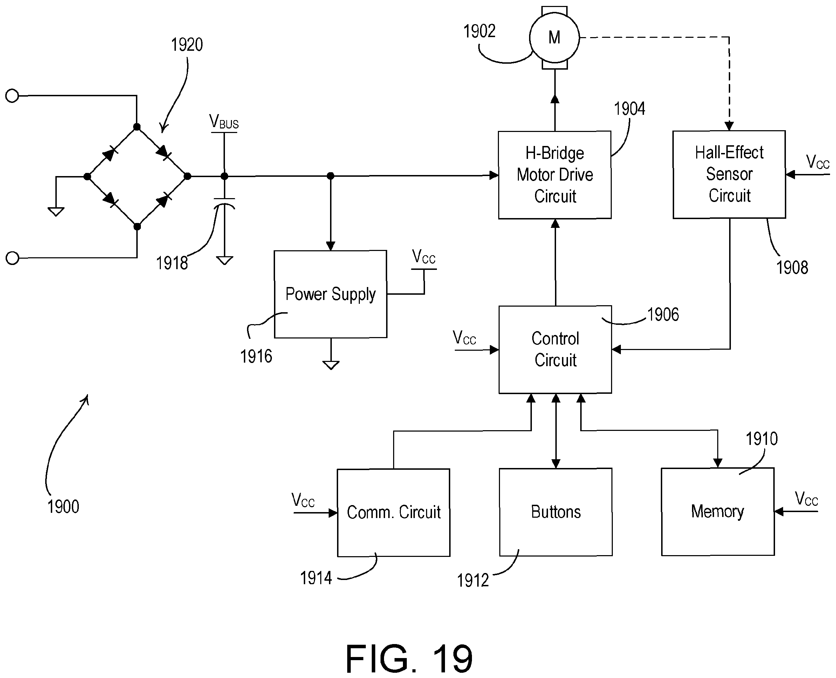

FIG. 19 is a simplified block diagram of an example motor drive unit 1900 *(e.g., a motor drive unit of the motorized window treatment 116 and/or the drive unit 230 of the blind system 210)*, in accordance with some embodiments. The motor drive unit 1900 may comprise a motor 1902 *(e.g., a DC motor)* that may be operated to raise and lower a cover material and/or tilt slats *(e.g., the slats 212)* to control the amount of daylight entering a space. The motor 1902 may be controlled by a pulse-width modulated (PWM) signal and a speed of the mtor may be adjusted by adjusting a duty cycle of the PWM signal applied to the DC motor 1902. For example, the motor 1902 may be operatively coupled to raise and lower a bottom bar and/or tilt slats of a motorized blind *(e.g., the bottom bar 216 and/or the slats 212 of the blind system 210)*. Changing the magnitude of the DC voltage or the duty cycle of the PWM signal applied to the motor 1902 may change the rotational speed of the motor. Further, the motor 1902 may be configured to change the direction of rotation in response to a change in the polarity of the DC voltage or PWM signal applied to the motor 1902.

To accomplish this level of control of the motor 1902, the motor 1902 may be coupled to an H-bridge motor drive circuit 1904, which may be driven by a control circuit 1906. The H-bridge motor drive circuit 1904 may include four transistors, such as, for example, four field effect transistors (not shown). The transistors may be coupled such that, when two of the transistors are conductive, a positive DC voltage is applied to the motor 1902 to cause the motor to rotate in a forward direction. When the other two transistors of the H-bridge circuit 1904 are conductive, a negative DC voltage may be applied to the motor 1902 to cause the motor 1902 to rotate in the reverse direction. To control the speed of the motor 1902, the control circuit 1906 may drive at least one transistor of the H-bridge circuit 1904 with a PWM signal. The control circuit 1906 may include any suitable processing circuitry, such as, for example, a microprocessor, *e.g.*, a complex instruction set computer (CISC) microprocessor, a reduced instruction set computing (RISC) microprocessor, and/or a very long instruction word (VLIW) microprocessor), a programmable logic device (PLD), a microcontroller, an application specific integrated circuit (ASIC), a field programmable gate array (FPGA), a chip multiprocessor (CMP) or any suitable processing device or control circuit. The control circuit 1906 may be configured to execute a timeclock. The control circuit 1906 may be configured to control the motor 1902 *(e.g., to tilt the slats)* at the event times of the timeclock schedule.

The motor drive unit 1900 may include a rotational position sensor, such as, for example, a Hall effect sensor (HES) circuit 1908, which may be configured to provide information regarding the rotational speed and the direction of the motor 1902 to the control circuit 1906. The rotational position sensor may also comprise other suitable position sensors, such as, for example, optical and resistor sensors. The control circuit 1906 may be configured to determine a rotational position of the motor 1902 in response to the Hall effect sensor circuit 1908. The control circuit 1906 may use the rotational position of the motor 1902 to determine a present position of the covering material (e.g., such as the covering material 118 of the motorized window treatment 116 and/or the bottom bar 216 of the drive system 210). The control circuit 1906 may be coupled to a non-volatile memory 1910 for storage of the present position of the covering material, the fully open position, and the fully closed position. In addition, the memory 1910 may be configured to store a timeclock schedule including event times at which to control the motor 1902 (e.g., to tilt the slats). The memory 1910 may include an electrically erasable programmable read-only memory (EEPROM), although it will be appreciated that any suitable memory may be used.

The motor drive unit 1900 may include a communication circuit 1914 that allows the control circuit 1906 to transmit and receive communication signals to and from a keypad and/or other motor drive units 1900. The motor drive unit 1900 may further include a plurality of buttons 1912 that allow a user to provide inputs to the control circuit 1906 during setup and configuration of a motorized window treatment. The control circuit 1906 may drive the motor 1902 in a first direction at a constant rotational speed while a first button of the plurality of buttons 1912 is pressed and held, and may drive the motor 1902 in a second direction at a constant rotational speed while a second button of the plurality of buttons 1912 is pressed. In addition, the control circuit 1906 may be configured to tilt slats of a motorized blind in a first direction while the first button of the plurality of buttons 1912 is pressed and in a second direction while the second button of the plurality of buttons 1912 is pressed.

The control circuit 1906 may be configured to control the movement of the covering material in response to a covering movement command, e.g., from the communication signals received via the communication circuit 1914 or the user inputs from the buttons 1912. The covering movement command may consist of a command type (e.g., "move to a desired position" or "tilt to a desired tilt position") and/or a desired position (e.g., to which the control circuit 1906 may be configured to control the covering material and/or tilt the slats of a motorized blind). The desired position may be a preset position, a fully-open position, or a fully-closed position. In addition, the desired position may be a tilt position of a motorized blind.

The motor drive unit 1900 may receive power from an AC supply voltage $V_{AC}$ (e.g., 24VAC) provided by an alternating-current (AC) power source (not shown). The AC supply voltage $V_{AC}$ may be provided to a full-wave rectifier bridge 1920 for generating a bus voltage $V_{BUS}$ (e.g., 30VDC), which may be filtered by a storage capacitor 1918. The bus voltage $V_{BUS}$ may be provided to the H-bridge motor drive circuit 1904 for driving the motor 1902. A power supply 1916 may receive the bus voltage $V_{BUS}$ and generate a DC supply voltage Vcc (e.g., 5VDC) for powering the low-voltage circuitry of the motor drive unit 1900 (e.g., the control circuit 1906, the memory 1910, and the communication circuit 1914).

Although features and elements are described herein in particular combinations, each feature or element can be used alone or in any combination with the other features and elements. The methods described herein may be implemented in a computer program, software, or firmware incorporated in a computer-readable medium for execution by a computer or processor. Examples of computer-readable storage media include, but are not limited to, a read only memory (ROM), a random access memory (RAM), removable disks, and optical media such as CD-ROM disks, and digital versatile disks (DVDs).

**Claims**

1. A blind system (210) configured to be mounted to cover a window located on a façade of a building, the blind system (210) comprising:

   a headrail (214);
   a bottom bar (216);
   a plurality of slats (212) spaced apart vertically between the headrail (214) and the bottom bar (216);
   a lift cord (218) extending from the headrail (214) to the bottom bar (216) to provide for raising and lowering the bottom bar (216);
   a tilt ladder (220) extending from the headrail (214) to the bottom bar (216) and operable to support the slats (212) and to tilt the slats (212); and
   a drive unit (230) operably coupled to the tilt ladder (220) for tilting the slats (212), the drive unit (230) configured to selectively tilt the slats (212) into each of a plurality of tilt positions that include at least: a view tilt position in which the slats (212) are approximately horizontal, a slanted tilt position in which the slats (212) are positioned to block direct sunlight from shining into the building, and a privacy tilt position in which the slats (212) are approximately vertical;
   wherein the drive unit (230) is configured to tilt the slats (212) into one of the plurality of tilt positions at each of a plurality of event times according to a timeclock schedule, the plurality of event times determined from a predicted position of the sun, such that the drive unit (230) is configured to:

tilt the slats (212) to the slanted tilt position when the predicted position of the sun indicates that direct sunlight is incident on the façade based on a first endpoint elevation angle determined using a facing direction of the facade;
tilt the slats (212) to the view tilt position when the predicted position of the sun indicates that no direct sunlight is incident on the façade based on a determined second endpoint elevation angle determined using the facing direction of the facade, wherein the second endpoint elevation angle differs from the first endpoint elevation angle; and
tilt the slats (212) to the privacy tilt position between sunset and sunrise.

2. The blind system (210) of claim 1, wherein the drive unit (230) comprises a motor operatively coupled to the tilt ladder (220) and a control circuit configured to control the motor to tilt the slats (212).

3. The blind system (210) of claim 2, wherein the drive unit (230) further comprises a wireless communication circuit configured to receive wireless signals, the control circuit configured to receive a message including a command to tilt the slats (212) via the wireless communication circuit.

4. The blind system (210) of claim 3, wherein the drive unit (230) further comprises a memory for storing the timeclock schedule, and the control circuit is configured to execute a timeclock to determine the event times for tilting the slats (212) according to the timeclock schedule.

5. The blind system (210) of claim 4, wherein the control circuit is configured to determine the plurality of event times of the timeclock schedule from the predicted position of the sun.

6. The blind system (210) of claim 5, wherein the control circuit is configured to determine the plurality of event times of the timeclock schedule from the predicted position of the sun based on the facing direction of the façade on which the blind system (210) is mounted.
(210)

7. The blind system (210) of claim 6, wherein the control circuit is configured to determine the plurality of event times of the timeclock schedule based a worst case event time as determined at each of the determined first endpoint elevation angle and the determined second endpoint elevation angle.

8. The blind system (210) of claim 1, wherein the control circuit is configured to calculate a profile angle of the sun using the determined first endpoint elevation angle and the determined second endpoint elevation angle, and determine when direct sunlight is incident on the façade when the profile angle of the sun is between 0° and 90°.

9. The blind system (210) of claim 1, wherein the control circuit is configured to determine solar azimuth angle limits for the façade based on the determined first endpoint elevation angle and the determined second endpoint elevation angle and a total façade angle, and to determine that direct sunlight is incident on the façade when a solar azimuth angle of the sun is between solar azimuth angle limits for the façade.

10. The blind system (210) of claim 6, wherein the facing direction of the façade is determined by facing a mobile device towards an interior surface of the façade to allow the mobile device to receive the facing direction of the façade in response to a user input and determine a compensation factor between a compass direction of the mobile device and the facing direction of the façade.

11. The blind system (210) of claim 5, wherein the control circuit is configured to determine a time that the sun begins shining on façade based on the predicted position of the sun and generate a timeclock event to tilt the slats (212) to the slanted tilt position at the determined time.

12. The blind system (210) of claim 5, wherein the control circuit is configured to determine a time that the sun stops shining on façade based on the predicted position of the sun and generate a timeclock event to tilt the slats (212) to the view position at the determined time.

13. The blind system (210) of claim 5, wherein the control circuit is configured to determine a sunset time based on the predicted position of the sun and generate a timeclock event to tilt the slats (212) to the privacy position based on the sunset time.

14. The blind system (210) of claim 3, wherein the control circuit is configured to receive the respective commands for tilting the slats (212) at the event times of the timeclock schedule.

15. The blind system (210) of claim 1, wherein the drive unit (230) is configured to determine the plurality of event times of the timeclock schedule from the predicted position of the sun and store the timeclock schedule in memory; wherein the profile angle of the sun is calculated using the determined first endpoint elevation angle and the determined second endpoint elevation angle; and wherein the solar azimuth angle limits for the façade are based on the determined first endpoint elevation angle and the determined second endpoint elevation angle and a total façade angle.

**Patentansprüche**

1. Rollosystem (210), das konfiguriert ist, um montiert zu werden, um ein Fenster abzudecken, das an einer Fassade eines Gebäudes lokalisiert ist, wobei das Rollosystem (210) Folgendes umfasst:

eine Oberschiene (214);
eine Unterleiste (216);
eine Vielzahl von Lamellen (212), die vertikal zwischen der Oberschiene (214) und der Unterleiste (216) beabstandet sind;
eine Zugschnur (218), die sich von der Oberschiene (214) zu der Unterleiste (216) erstreckt, um ein Anheben und Absenken der Unterleiste (216) bereitzustellen;
ein Leiterband (220), das sich von der Oberschiene (214) zu der Unterleiste (216) erstreckt und betreibbar ist, um die Lamellen (212) zu stützen und um die Lamellen (212) zu kippen; und
eine Antriebseinheit (230), die betriebsmäßig zum Kippen der Lamellen (212) mit dem Leiterband (220) gekoppelt ist, wobei die Antriebseinheit (230) konfiguriert ist, um die Lamellen (212) selektiv in jede einer Vielzahl von Kipppositionen zu kippen,
die mindestens Folgendes beinhalten: eine Sichtkippposition, in der die Lamellen (212) annähernd horizontal sind, eine Schrägkippposition, in der die Lamellen (212) positioniert sind,
um direktes Sonnenlicht daran zu hindern, in das Gebäude zu scheinen, und eine Sichtschutzkippposition, in der die Lamellen (212) annähernd vertikal sind;
wobei die Antriebseinheit (230) konfiguriert ist, um die Lamellen (212) in eine der Vielzahl von Kipppositionen zu jeder einer Vielzahl von Ereigniszeitpunkten gemäß einem Zeitschaltuhrplan zu kippen, wobei die Vielzahl von Ereigniszeitpunkten derart aus einer vorhergesagten Position der Sonne bestimmt wird, dass die Antriebseinheit (230) konfiguriert ist, um:

die Lamellen (212) in die Schrägkippposition zu kippen, wenn die vorhergesagte Position der Sonne anzeigt, dass direktes Sonnenlicht auf die Fassade fällt, basierend auf einem ersten Endpunkthöhenwinkel, der mithilfe einer Ausrichtungsrichtung der Fassade bestimmt wird;
die Lamellen (212) in die Sichtkippposition zu kippen, wenn die vorhergesagte Position der Sonne anzeigt, dass kein direktes Sonnenlicht auf die Fassade fällt, basierend auf einem bestimmten zweiten Endpunkthöhenwinkel, der unter Verwendung der Ausrichtungsrichtung der Fassade bestimmt wird, wobei sich der zweite Endpunkthöhenwinkel von dem ersten Endpunkthöhenwinkel unterscheidet; und
die Lamellen (212) zwischen Sonnenuntergang und Sonnenaufgang in die Sichtschutzkippposition zu kippen.

2. Rollosystem (210) nach Anspruch 1, wobei die Antriebseinheit (230) einen Motor, der betriebsmäßig mit dem Leiterband (220) gekoppelt ist, und eine Steuerschaltung, die konfiguriert ist, um den Motor zu steuern, um die Lamellen (212) zu kippen, umfasst.

3. Rollosystem (210) nach Anspruch 2, wobei die Antriebseinheit (230) ferner eine drahtlose Kommunikationsschaltung umfasst, die konfiguriert ist, um drahtlose Signale zu empfangen, wobei die Steuerschaltung konfiguriert ist, um über die drahtlose Kommunikationsschaltung eine Nachricht zu empfangen, die einen Befehl beinhaltet, um die Lamellen (212) zu kippen.

4. Rollosystem (210) nach Anspruch 3, wobei die Antriebseinheit (230) ferner einen Speicher zum Speichern des Zeitschaltuhrplans umfasst und die Steuerschaltung konfiguriert ist, um eine Zeitschaltuhr auszuführen, um die Ereigniszeitpunkte zum Kippen der Lamellen (212) gemäß dem Zeitschaltuhrplan zu bestimmen.

5. Rollosystem (210) nach Anspruch 4, wobei die Steuerschaltung konfiguriert ist, um die Vielzahl von Ereigniszeitpunkten des Zeitschaltuhrplans aus der vorhergesagten Position der Sonne zu bestimmen.

6. Rollosystem (210) nach Anspruch 5, wobei die Steuerschaltung konfiguriert ist, um die Vielzahl von Ereigniszeitpunkten des Zeitschaltuhrplans aus der vorhergesagten Position der Sonne, basierend auf der Ausrichtungsrichtung der Fassade, an der das Rollosystem (210) montiert ist, zu bestimmen. (210)

7. Rollosystem (210) nach Anspruch 6, wobei die Steuerschaltung konfiguriert ist, um die Vielzahl von Ereigniszeitpunkten des Zeitschaltuhrplans, basierend auf einem Worst-Case-Ereigniszeitpunkt, zu bestimmen, wie er bei jedem der bestimmten ersten Endpunkthöhenwinkel und des bestimmten zweiten Endpunkthöhenwinkels bestimmt wird.

8. Rollosystem (210) nach Anspruch 1, wobei die Steuerschaltung konfiguriert ist, um mithilfe des bestimmten ersten Endpunkthöhenwinkels und des bestimmten zweiten Endpunkthöhenwinkels einen Profilwinkel der Sonne zu berechnet und zu bestimmen, wann direktes Sonnenlicht auf die Fassade fällt, wenn der Profilwinkel der Sonne zwischen 0° und 90° ist.

9. Rollosystem (210) nach Anspruch 1, wobei die Steuerschaltung konfiguriert ist, um basierend auf dem bestimmten ersten Endpunkthöhenwinkel und dem bestimmten zweiten Endpunkthöhenwinkel und einem Gesamtfassadenwinkel Solar-Azimutwinkel-Grenzwerte für die Fassade zu bestimmen und zu bestimmen, dass direktes Sonnenlicht auf die Fassade fällt, wenn ein Solar-Azimutwinkel der Sonne zwischen Solar-Azimutwinkel-Grenzwerten für die Fassade ist.

10. Rollosystem (210) nach Anspruch 6, wobei die Ausrichtungsrichtung der Fassade bestimmt wird, indem eine mobile Vorrichtung auf eine Innenfläche der Fassade gerichtet wird, um zu ermöglichen, dass die mobile Vorrichtung die Ausrichtungsrichtung der Fassade als Reaktion auf eine Benutzereingabe empfängt und einen Kompensationsfaktor zwischen einer Kompassrichtung der mobilen Vorrichtung und der Ausrichtungsrichtung der Fassade bestimmt.

11. Rollosystem (210) nach Anspruch 5, wobei die Steuerschaltung konfiguriert ist, um, basierend auf der vorhergesagten Position der Sonne, einen Zeitpunkt zu bestimmen, zu dem die Sonne auf die Fassade zu scheinen beginnt, und ein Zeitschaltuhrereignis zu erzeugen, um die Lamellen (212) zu dem bestimmten Zeitpunkt in die Schrägkippposition zu kippen.

12. Rollosystem (210) nach Anspruch 5, wobei die Steuerschaltung konfiguriert ist, um, basierend auf der vorhergesagten Position der Sonne, einen Zeitpunkt zu bestimmen, zu dem die Sonne auf die Fassade zu scheinen aufhört, und ein Zeitschaltuhrereignis zu erzeugen, um die Lamellen (212) zu dem bestimmten Zeitpunkt in die Sichtposition zu kippen.

13. Rollosystem (210) nach Anspruch 5, wobei die Steuerschaltung konfiguriert ist, um, basierend auf der vorhergesagten Position der Sonne, einen Sonnenuntergangszeitpunkt zu bestimmen und ein Zeitschaltuhrereignis zu erzeugen, um die Lamellen (212), basierend auf dem Sonnenuntergangszeitpunkt, in die Sichtschutzposition zu kippen.

14. Rollosystem (210) nach Anspruch 3, wobei die Steuerschaltung konfiguriert ist, um die jeweiligen Befehle zum Kippen der Lamellen (212) zu den Ereigniszeitpunkten des Zeitschaltuhrplans zu empfangen.

15. Rollosystem (210) nach Anspruch 1, wobei die Antriebseinheit (230) konfiguriert ist, um die Vielzahl von Ereigniszeitpunkten des Zeitschaltuhrplans aus der vorhergesagten Position der Sonne zu bestimmen und den Zeitschaltuhrplan in einem Speicher zu speichern; wobei der Profilwinkel der Sonne mithilfe des bestimmten ersten Endpunkthöhenwinkels und des bestimmten zweiten Endpunkthöhenwinkels berechnet wird; und wobei die Solar-Azimutwinkel-Grenzwerte für die Fassade auf dem bestimmten ersten Endpunkthöhenwinkel und dem bestimmten zweiten Endpunkthöhenwinkel und einem Gesamtfassadenwinkel basieren.

**Revendications**

1. Système de store (210) configuré pour être monté de manière à couvrir une fenêtre située sur la façade d'un bâtiment, le système de store (210) comprenant :

   une barre d'attache (214) ;
   une barre inférieure (216) ;
   une pluralité de lattes (212) espacées verticalement entre la barre d'attache (214) et la barre inférieure (216) ;
   un cordon de levage (218) se prolongeant depuis la barre d'attache (214) jusqu'à la barre inférieure (216) pour permettre la montée et la descente de la barre inférieure (216) ;
   une échelle d'inclinaison (220) se prolongeant de la barre d'attache (214) à la barre inférieure (216) et servant à supporter les lattes (212) et à incliner les lattes (212) ; et
   une unité d'entraînement (230) couplée de manière opérationnelle à l'échelle d'inclinaison (220) pour incliner les lattes (212), l'unité d'entraînement (230) étant configurée pour incliner sélectivement les lattes (212) dans chacune d'une pluralité de positions d'inclinaison qui comportent au moins : une position d'inclinaison de vue dans laquelle les lattes (212) sont approximativement horizontales, une position d'inclinaison inclinée dans laquelle les lattes (212) sont positionnées pour empêcher la lumière directe du soleil de briller dans le bâtiment, et une position d'inclinaison d'intimité dans laquelle les lattes (212) sont approximativement verticales ;
   dans lequel l'unité d'entraînement (230) est configurée pour incliner les lattes (212) dans l'une de la pluralité de positions d'inclinaison à chaque instant d'une pluralité d'heures d'événement selon un programme d'horloge, la pluralité d'heures d'événement étant déterminées à partir d'une position prédite du soleil, de sorte que l'unité d'entraînement (230) est configurée pour :

   incliner les lattes (212) vers la position d'inclinaison inclinée lorsque la position prédite du soleil indique que la lumière directe du soleil est incidente sur la façade sur la base d'un premier angle d'élévation de point d'extrémité déterminé à l'aide d'une direction d'orientation de la façade ;
   incliner les lattes (212) vers la position d'inclinaison de vue lorsque la position prédite du soleil indique que la lumière directe du soleil est incidente sur la façade sur la base d'un second angle d'élévation de point d'extrémité déterminé déterminé à l'aide de la direction d'orientation de la façade, dans lequel le second angle d'élévation de point d'extrémité diffère du premier angle d'élévation de point d'extrémité ; et
   incliner les lattes (212) à la position d'inclinaison d'intimité entre le coucher et le lever du soleil.

2. Système de store (210) selon la revendication 1, dans lequel l'unité d'entraînement (230) comprend un moteur couplé de manière opérationnelle à l'échelle d'inclinaison (220) et un circuit de commande configuré pour commander le moteur afin d'incliner les lattes (212).

3. Système de store (210) selon la revendication 2, dans lequel l'unité d'entraînement (230) comprend également un circuit de communication sans fil configuré pour recevoir des signaux sans fil, le circuit de commande étant configuré pour recevoir un message comportant une commande pour incliner les lattes (212) via le circuit de communication sans fil.

4. Système de store (210) selon la revendication 3, dans lequel l'unité d'entraînement (230) comprend également une mémoire pour stocker le programme d'horloge, et le circuit de commande est configuré pour exécuter une horloge pour déterminer les heures d'événement pour incliner les lattes (212) selon le programme d'horloge.

5. Système de store (210) selon la revendication 4, dans lequel le circuit de commande est configuré pour déterminer la pluralité d'heures d'événement du programme d'horloge à partir de la position prédite du soleil.

6. Système de store (210) selon la revendication 5, dans lequel le circuit de commande est configuré pour déterminer la pluralité d'heures d'événement du programme d'horloge de la position prédite du soleil sur la base de la direction d'orientation de la façade sur laquelle le système de store (210) est monté (210).

7. Système de store (210) selon la revendication 6, dans lequel le circuit de commande est configuré pour déterminer la pluralité d'heures d'événement du programme d'horloge sur la base d'une heure d'événement du pire cas telle que déterminée à chacun du premier angle d'élévation de point d'extrémité déterminé et du second angle d'élévation de point d'extrémité déterminé.

8. Système de store (210) selon la revendication 1, dans lequel le circuit de commande est configuré pour calculer un angle de profil du soleil à l'aide du premier angle d'élévation de point d'extrémité déterminé et du second angle d'élévation de point d'extrémité déterminé, et déterminer quand la lumière directe du soleil est incidente sur la façade lorsque l'angle de profil du soleil est compris entre 0° et 90°.

9. Système de store (210) selon la revendication 1, dans lequel le circuit de commande est configuré pour déterminer des limites d'angle d'azimut solaire pour la façade sur la base de l'angle d'élévation de point d'extrémité déterminé et du second angle d'élévation de point d'extrémité déterminé et d'un angle de façade total, et pour déterminer que la lumière directe du soleil est incidente sur la façade lorsque un angle d'azimut solaire du soleil est dans les limites d'angle d'azimut solaire pour la façade.

10. Système de store (210) selon la revendication 6, dans lequel la direction d'orientation de la façade est déterminée en orientant un dispositif mobile vers une surface intérieure de la façade pour permettre au dispositif mobile de recevoir la direction d'orientation de la façade en réponse à une entrée d'utilisateur et de déterminer un facteur de compensation entre une direction de boussole du dispositif mobile et la direction d'orientation de la façade.

11. Système de store (210) selon la revendication 5, dans lequel le circuit de commande est configuré pour déterminer une heure à laquelle le soleil commence à briller sur la façade sur la base de la position prédite du soleil et générer un événement d'horloge pour incliner les lattes (212) vers la position d'inclinaison inclinée à l'heure déterminée.

12. Système de store (210) selon la revendication 5, dans lequel le circuit de commande est configuré pour déterminer une heure à laquelle le soleil cesse de briller sur la façade sur la base de la position prédite du soleil et générer un événement d'horloge pour incliner les lattes (212) vers la position de vue à l'heure déterminée.

13. Système de store (210) selon la revendication 5, dans lequel le circuit de commande est configuré pour déterminer une heure de coucher du soleil sur la base de la position prédite du soleil et générer un événement d'horloge pour incliner les lattes (212) vers la position d'intimité sur la base de l'heure de coucher du soleil.

14. Système de store (210) selon la revendication 3, dans lequel le circuit de commande est configuré pour recevoir les commandes respectives d'inclinaison des lattes (212) aux heures d'événement du programme d'horloge.

15. Système de store (210) selon la revendication 1, dans lequel l'unité d'entraînement (230) est configurée pour déterminer la pluralité d'heures d'événement du programme d'horloge à partir de la position prédite du soleil et stocker le programme d'horloge en mémoire ; dans lequel l'angle de profil du soleil est calculé à l'aide du premier angle d'élévation de point d'extrémité déterminé et du second angle d'élévation de point d'extrémité déterminé ; et dans lequel les limites d'angle d'azimut solaire pour la façade sont basées sur le premier angle d'élévation de point d'extrémité déterminé et le second angle d'élévation de point d'extrémité déterminé et un angle de façade total.

FIG. 1

EP 4 073 338 B1

FIG. 2

FIG. 3A    FIG. 3B    FIG. 3C

EP 4 073 338 B1

FIG. 4A

490

| Event No. | Event Time | Tilt Positions to which Blinds on Different Facades are Controlled | | | |
|---|---|---|---|---|---|
| | | East | South | West | North |
| 1 | 4:36 | Slanted | View | View | Slanted |
| 2 | 8:05 | | Slanted | | View |
| 3 | 12:01 | View | | Slanted | |
| 4 | 15:56 | | View | | Slanted |
| 5 | 19:26 | | | View | View |
| 6 | 19:55 | Privacy | Privacy | Privacy | Privacy |

# FIG. 4B

FIG. 5C

FIG. 5B

FIG. 5A

**540**

3:24

< Room

Choose the room where this shade is located.

Kitchen

Living Room

Dining Room

Master Bedroom

Front Porch

Foyer/Entry                    ⌄

Exterior

Family Room

Garage

Office

Bedroom                        ⌄

Bathroom                       ⌄

Basement                       ⌄

Hallway/Stairs                 ⌄

**FIG. 5D**

**550**

3:24

< Device Info

Please name your Wood Blind.

Kitchen  Blinds 1              ⊛

Q W E R T Y U I O P

A S D F G H J K L

⬆ Z X C V B N M ⌫

123 ☺  space

**FIG. 5E**

**560**

3:34

Devices

Kitchen Blinds 1 added!

1 Device Total

I'm done adding devices

Kitchen Blinds 1
South West

**FIG. 5F**

FIG. 6

FIG. 7

FIG. 8

FIG. 9

1000

Start

1010

1012 — Determine end point elevation angles $a_{e1}$, $a_{e2}$ for range of possible elevation angles on the present façade

1014 — Determine event times based on when the sun may be directly shining on the façade at first elevation angle $a_{e1}$

1018 — For each event in timeclock schedule, determine worst cast event time from both elevation angles $a_{e1}$, $a_{e2}$

1016 — Determine event times based on when the sun may be directly shining on the façade at second elevation angle $a_{e2}$

1020 — Determine event time $t_{PRIV}$ for privacy tilt position based on sunset time $t_{SUNSET}$ ($t_{PRIV} = T_{SUNSET} + t_{OFFSET}$)

1022 — Determine if timeclock event to control blinds to view tilt position at sunrise time $t_{SUNRISE}$ should be created

1026 — Store timeclock schedule for motorized blinds on the present facade

1024 — Generate timeclock schedule for controlling blinds to slanted, view, and privacy positions at determined event times

End

# FIG. 10

FIG. 11

FIG. 12

FIG. 13

FIG. 14

EP 4 073 338 B1

FIG. 15

FIG. 16

EP 4 073 338 B1

FIG. 17

EP 4 073 338 B1

FIG. 18

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190119978 A1
- US 5248919 A
- US 20140132475
- US 03322308
- US 20140001977
- US 20150185752
- US 5905442 A
- US 8417388 B
- US 8228163 B
- US 20140265568